# EUROPEAN PATENT APPLICATION

(11) **EP 2 070 989 A1**
(43) Date of publication of application: **17.06.2009**
(21) Application number: 07807790.6
(22) Date of filing: 21.09.2007
(51) Int. Cl.: C09B 45/00, B41M 5/26, G11B 7/244

(54) **METAL-CHELATE AZO DYE AND OPTICAL RECORDING MEDIUM**

(30) Priority: 25.09.2006 JP 2006259597
(71) Applicant: Mitsubishi Kagaku Media Co., Ltd., Minato-ku Tokyo (JP)
(72) Inventor: SHODA, Hisashi, Kanagawa 227-8502 (JP); UCHIDA, Naoyuki, Tokyo 108-8415 (JP); SATAKE, Kenichi, Kanagawa 227-8502 (JP); NODA, Yoshihiro, Tokyo 108-8415 (JP)
(74) Representative: Vossius & Partner
(86) International application number: PCT/JP2007/068460
(87) International publication number: WO 2008/038603

(57) **Abstract**

The invention provides an azo metal chelate dye suitable for use in a recording layer of an optical recording medium capable of high-speed recording or an optical recording medium having plural recording layers, and an optical recording medium. The azo metal chelate dye comprises an azo dye compound represented by the general formula (1) and Zn²⁺: 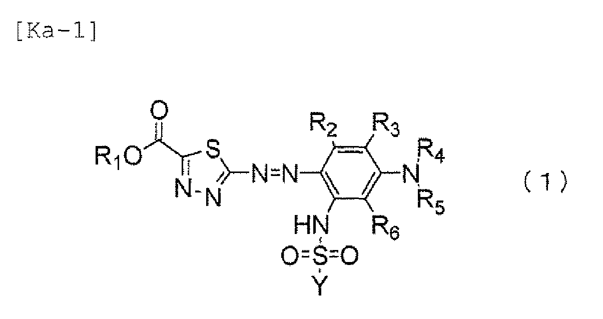 (wherein R₁ represents a linear or branched alkyl group that may be substituted, or a cycloalkyl group that may be substituted; Y represents a linear or branched alkyl group substituted with at least two fluorine atoms; R₂, R₃, R₄, R₅ and R₆ each independently represents a hydrogen atom or a linear or branched alkyl group that may be substituted, and R₃ and R₄, R₄ and R₅, or R₅ and R₆ may be bonded with each other to form a ring; and a proton is released from the compound of formula (1) to form the chelate dye together with Zn²⁺).

## Description

### TECHNICAL FIELD

The present invention relates to an azo metal chelate dye having a high reflectance and an optical recording medium employing the dye in a recording layer. More particularly, the invention relates to an azo metal chelate dye suitable for the recording layer of an optical recording medium capable of high-speed recording or for a recording layer of an optical recording medium having two or more recording layers, and also to an optical recording medium.

### BACKGROUND ART

With the recent trend toward higher processing speeds in computers and higher capacities in hard disks, the amount of data which can be handled has increased. In order to cope with the data amount increase, DVD-Rs are being developed as higher-capacity recording media. Various dyes including cyanine dyes and metal chelate dyes have been proposed as dyes for use in the recording layers of DVD-Rs. Many optical recording media employing metal chelate dyes, which are excellent in recording characteristics such as light resistance and durability, among those dyes have been proposed (see patent document 1 to patent document 3).

Recently, with a further increase in data amount, it has become important to heighten the rate of information recording in an optical recording medium (hereinafter, sometimes referred to as "disk" or "optical disk"). Although the ordinary recording rate in DVD-Rs, for example, is about 3.5 m/s (hereinafter, sometimes referred to as 1X), an optical recording medium capable of information recording at a rate of about 28 m/s, which corresponds to eight times that rate (hereinafter, sometimes referred to as 8X), has been proposed (see patent document 4).

Patent Document 1: JP-A-5-268994
Patent Document 2: JP-A-11-166125
Patent Document 3: JP-A-2000-309722
Patent Document 4: JP-A-2005-120350

### DISCLOSURE OF THE INVENTION

### PROBLEMS TO BE SOLVED BY THE INVENTION

With respect to such enhancement in the rate of information recording, even higher performances are desired. There is a desire for an optical recording medium capable of information recording at about 42 m/s, which corresponds to 12 times the rate 1X (hereinafter, sometimes referred to as 12X), or at about 56 m/s, which corresponds to 16 times the rate 1X (hereinafter, some times referred to as 16X). However, when recording is conducted at such a high rate, the quantity of irradiation light used for recording (laser power in the case of a laser) is relatively smaller. Consequently, there is a desire for a dye which enables recording to be conducted even with a low laser power.

On the other hand, with respect to techniques for increasing the capacity of optical recording media, a multilayered recording medium having two or more recording layers has been proposed. In the case of an optical recording medium having two or more recording layers on one side, a light for recording/reproducing is caused to enter the medium from one side. However, the power of the laser light entering a recording layer located far from the entrance side is low. Consequently, in the field of multilayered recording media also, there is a desire for a dye which enables recording with a low laser power.

However, no dye which sufficiently meets those requirements has been found so far.
In view of the problems described above, an object of the invention is to provide: an azo metal chelate dye applicable to the recording layer of an optical recording medium capable of recording at a rate as high as 12X or 16X or to a recording layer of a multilayered recording medium having two or more recording layers; and an optical recording medium employing the dye.

### MEANS FOR SOLVING THE PROBLEMS

The present inventors aimed to obtain an azo metal chelate dye having the property of being high in sensitivity and reflectance in order to overcome those problems. Specifically, they have found that the problems described above can be resolved by optimizing the azo ligands and metal of an azo metal chelate dye suitable for high-speed recording and thereby attaining a longer absorption wavelength and a higher refractive index at a recording wavelength. The invention has been thus completed.

The invention provides an azo metal chelate dye comprising an azo dye compound represented by the following general formula (1) and Zn²⁺.

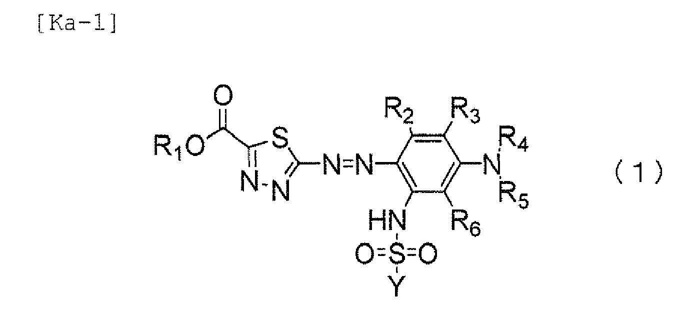

(In general formula (1), R₁ represents a linear or branched alkyl group that may be substituted or a cycloalkyl group that may be substituted; Y represents a linear or branched alkyl group substituted with at least two fluorine atoms; and R₂, R₃, R₄, R₅, and R₆ each independently represents a hydrogen atom or a linear or branched alkyl group that may be substituted, and R₃ and R₄, R₄ and R₅, or R₅ and R₆ may be bonded to each other to form a ring; and a proton is released from the compound represented by formula (1) so as to form the chelate dye with Zn²⁺).

The invention further provides an azo metal chelate dye comprising an azo dye compound represented by the following general formula (2) and Zn²⁺.

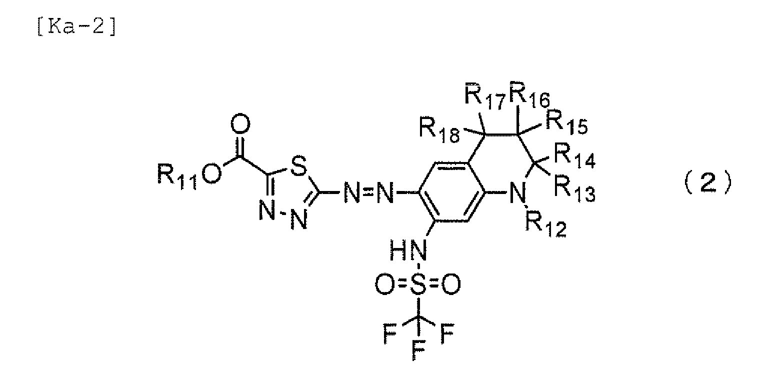

(In general formula (2), wherein R₁₁ represents a linear or branched alkyl group that may be substituted or a cycloalkyl group that may be substituted; R₁₂ represents a linear or branched alkyl group that may be substituted; and R₁₃ to R₁₈ each independently represent a hydrogen atom or a linear or branched alkyl group that may be substituted; and a proton is released from the compound represented by formula (2) so as to form the chelate dye with Zn²⁺).
The azo dye compound represented by general formula (2) is preferably one in which R₁₂ is a linear or branched alkyl group and R₁₃ to R₁₈ each independently are a hydrogen atom or methyl.

The invention furthermore provides an optical recording medium comprising a recording layer including an azo metal chelate dye comprising an azo dye compound represented by general formula (1) or general formula (2) described above and Zn²⁺.
It is preferred that the optical recording medium to which the invention is applied should be one which has two or more recording layers and in which at least one of the recording layers includes an azo metal chelate dye comprising an azo dye compound represented by general formula (1) or general formula (2) and Zn²⁺.
Furthermore, the optical recording medium is preferably capable of recording at a 12-fold speed or higher.

### EFFECT OF THE INVENTION

According to the invention, an azo metal chelate dye and an optical recording medium are provided which is suitable for the recording layer of an optical recording medium capable of high-speed recording or for at least one recording layer of an optical recording medium having two or more recording layers.

### BEST MODE FOR CARRYING OUT THE INVENTION

Best modes for carrying out the invention (hereinafter, referred to as embodiments of the invention) will be explained below in detail. However, the invention should not be construed as being limited to the following embodiments, and various modifications of the invention can be made within the spirit of the invention. In the invention, an optical recording medium is sometimes referred to as "disk" or "optical disk".

The azo metal chelate dye to which this embodiment is applied is explained below.
The azo metal chelate dye to which this embodiment is applied is formed by combining an azo dye compound represented by the following general formula (1) with Zn²⁺ by chelate bonding.
The azo dye compound represented by general formula (1) is formed by combining a diazo ingredient including a 1, 3, 4-thiadiazole ring with a coupler ingredient at least having a fluorine-substituted alkylsulfonylamino group and an amino group. An optical recording medium having a recording layer containing an azo metal chelate dye having such structure is excellent in light resistance and weatherability.
Furthermore, since the 1,3,4-thiadiazole ring of the diazo ingredient has been substituted with an ester group, the recording medium has an improved reflectance. This is thought to be because the introduction of the ester group, which has a high electron density, has imparted an improved refractive index to the recording layer of the optical recording medium. In addition, it is thought that the recording layer has an increased absorption wavelength and this enhances absorption at a recording wavelength and improves sensitivity.

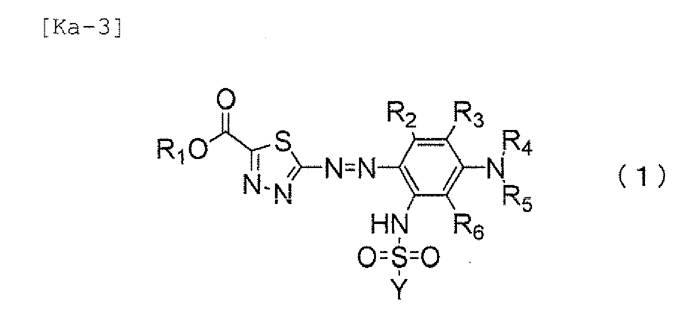

(In general formula (1), R₁ represents a linear or branched alkyl group that may be substituted or a cycloalkyl group that may be substituted; Y represents a linear or branched alkyl group substituted with at least two fluorine atoms; and R₂, R₃, R₄, R₅, and R₆ each independently represents a hydrogen atomor a linear or branched alkyl group that maybe substituted, and R₃ and R₄, R₄ and R₅, or R₅ and R₆ may be bonded to each other to form a ring; and a proton is released from the compound represented by formula (1) so as to form the chelate dye with Zn²⁺).

In general formula (1), R₁ is an optionally substituted liner or branched alkyl group or an optionally substituted cycloalkyl group. It is preferred that R₁ should be, for example, an unsubstituted linear or branched alkyl group, an unsubstituted cycloalkyl group, a fluorine-substituted linear or branched alkyl group, or an alkoxy-substituted linear or branched alkyl group. Especially preferred examples of R₁ are linear or branched alkyl groups having 1-4 carbon atoms, such as ethyl, propyl, isopropyl, butyl, isobutyl, t-butyl, and sec-butyl, and cycloalkyl groups having 3-8 carbon atoms, such as cyclopropyl, cyclobutyl, cyclopentyl, cyclohexyl, and cycloheptyl.

Especially preferred examples thereof are linear alkyl groups having 1-2 carbon atoms, such as methyl and ethyl, and cycloalkyl groups having 3-6 carbon atoms, such as cyclopentyl and cyclohexyl, because such groups cause reduced steric hindrance.
Examples of substituents of the alkyl group or cycloalkyl group represented by R₁ include halogen atoms and substituents containing a typical element such as oxygen, nitrogen, or sulfur. However, R₁ preferably is an unsubstituted group.

Preferred specific examples of that compound in the diazo ingredient in general formula (1) which is constituted of the 1,3,4-thiadiazole ring substituted with CO₂R₁ include the compounds having the following structures.

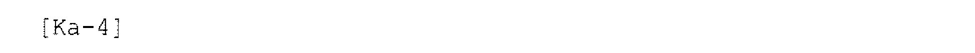

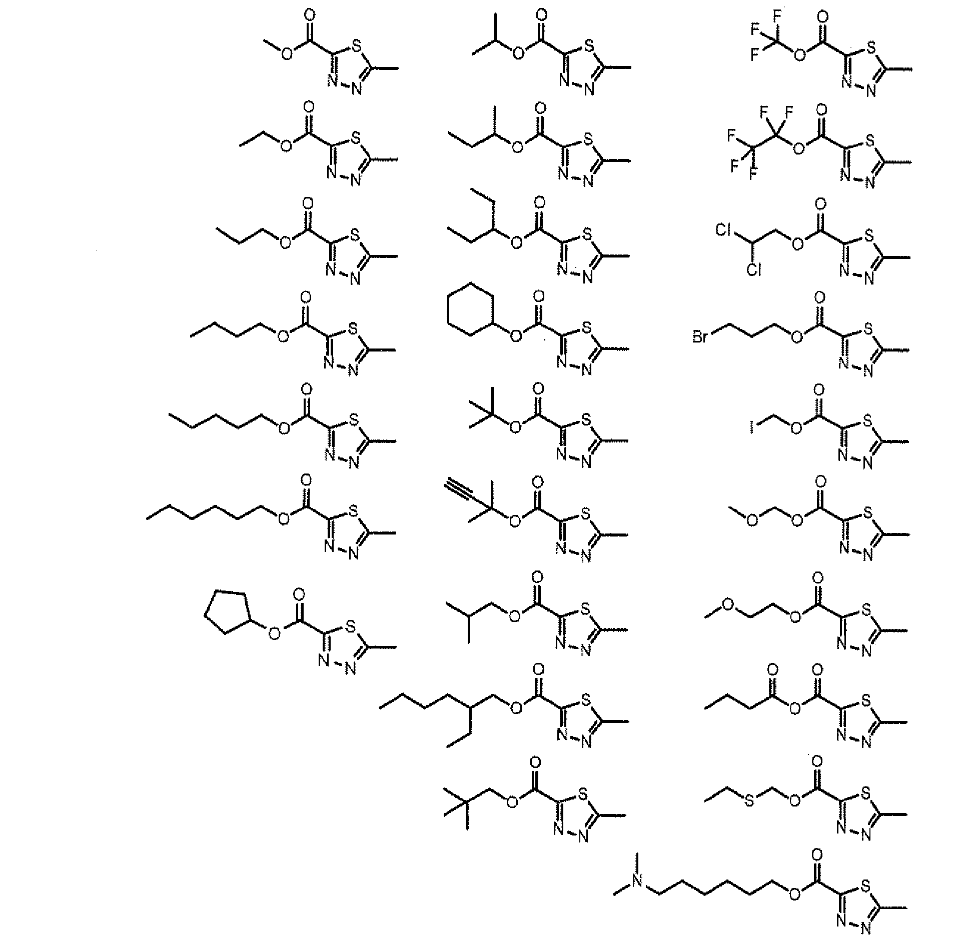

The coupler ingredient in general formula (1) includes a benzene ring substituted with NHSO₂Y, wherein Y is a linear or branched alkyl group substituted with at least two fluorine atoms. This alkyl group more preferably is a linear or branched alkyl group having 1-6 carbon atoms. It is more preferred that Y should be a linear alkyl group having 1-3 carbon atoms.
The number of the substituent fluorine atoms is generally 2 or larger and is generally 7 or smaller, preferably 5 or smaller, more preferably 3 or smaller. Specific examples of Y include difluoromethyl, trifluoromethyl, pentafluoroethyl, pentafluoropropyl, 2,2,2-trifluoroethyl, and 3,3,3-trifluoropropyl. Especially preferred examples of Y include trifluoromethyl and 2,2,2-trifluoroethyl.

R₂, R₃, R₄, R₅, and R₆ each independently are a hydrogen atom or an optionally substituted linear or branched alkyl group.
Examples of R₂, R₃, R₄, R₅, and R₆ include a hydrogen atom; linear alkyl groups having 1-6 carbon atoms, such as methyl, ethyl, n-propyl, n-butyl, n-pentyl, and n-hexyl; and branched alkyl groups having 3-8 carbon atoms, such as isopropyl, sec-butyl, isobutyl, t-butyl, 2-ethylhexyl, cyclopropyl, and cyclohexylmethyl.

Examples of substituents of the linear or branched alkyl groups include halogen atoms, alkoxy groups, alkoxycarbonyl groups, alkylcarbonyloxy groups, alkylcarbonyl groups, dialkylamino groups, and vinyl. Specific examples thereof include halogen atoms such as fluorine, chlorine, bromine, and iodine; alkoxy groups having 1-8 carbon atoms, such as methoxy, ethoxy, n-propoxy, isopropoxy, n-butoxy, isobutoxy, sec-butoxy, t-butoxy, n-pentyloxy, cyclopropyloxy, cyclohexylmethyloxy, and 2-ethylhexyloxy; alkoxycarbonyl groups having 2-9 carbon atoms, such as methoxycarbonyl, ethoxycarbonyl, n-propoxycarbonyl, isopropoxycarbonyl, n-butoxycarbonyl, isobutoxycarbonyl, sec-butoxycarbonyl, t-butoxycarbonyl, n-pentyloxycarbonyl, cyclopropyloxycarbonyl, cyclohexylmethoxycarbonyl, and 2-ethylhexyloxycarbonyl; alkylcarbonyloxy groups having 2-9 carbon atoms, such as methylcarbonyloxy, ethylcarbonyloxy, n-propylcarbonyloxy, isopropylcarbonyloxy, n-butylcarbonyloxy, isobutylcarbonyloxy, sec-butylcarbonyloxy, t-butylcarbonyloxy, n-pentylcarbonyloxy, cyclopropylcarbonyloxy, cyclohexylmethylcarbonyloxy, and 2-ethylhexylcarbonyloxy; alkylcarbonyl groups having 2-9 carbon atoms, such as acetyl, propionyl, butyryl, isobutyryl, valeryl, isovaleryl, 2-methylbutyryl, pivaloyl, hexanoyl, cyclopropylcarbonyl, cyclohexylmethylcarbonyl, and 2-ethylhexylcarbonyl; and dialkylamino groups having 2-16 carbon atoms, such as dimethylamino, diethylamino, dipropylamino, diisopropylamino, dibutylamino, diisobutylamino, di-t-butylamino, dihexylamino, ethylmethylamino, and butylpentylamino.
R₂, R₃, R₄, R₅, and R₆ each preferably are a hydrogen atom, a linear alkyl group having 1-6 carbon atoms, or ally, and more preferably are a hydrogen atom or an alkyl group having 1-2 carbon atoms. The al kyl group preferably is an unsubstituted one.

R₃ and R₄, R₄ and R₅, or R₅ and R₆ may be bonded to each other to form a ring. The ring thus formed is not particularly limited. Examples thereof include saturated or unsaturated, 3- to 8-membered carbocycles or heterocycles. Preferred examples thereof include a 5- to 7-membered ring which is formed by the bonding of R₃ to R₄ or R₄ to R₅ and is a saturated ring wherein all the constituent atoms other than the nitrogen atom shown in general formula (1) are carbon. The ring formed may have substituents. In a most preferred case, R₃ and R₄ are bonded to each other to form a 5- to 7-membered ring which is a saturated ring wherein all the constituent atoms other than the nitrogen atom shown in general formula (1) are carbon and which has no substituent or has been substituted with 1-3 methyl groups.

Preferred examples of the azo dye compound represented by general formula (1) include compounds represented by the following general formula (2).

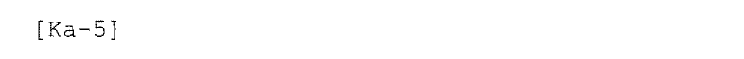

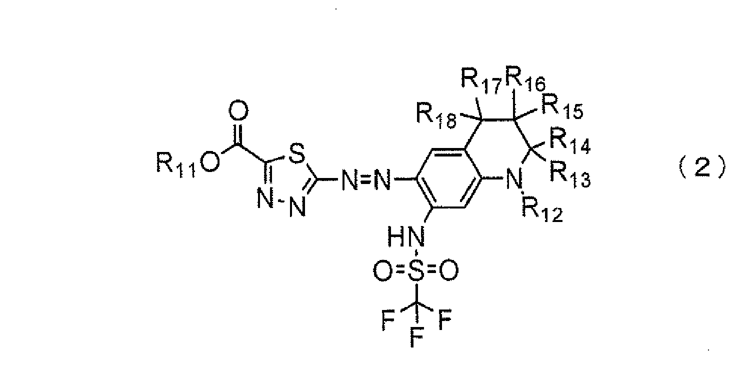

(In the formula, wherein R₁₁ represents a linear or branched alkyl group that may be substituted or a cycloalkyl group that may be substituted; R₁₂ represents a linear or branched alkyl group that may be substituted; and R₁₃ to R₁₈ each independently represent a hydrogen atom or a linear or branched alkyl group that may be substituted; and a proton is released from the compound represented by formula (2) so as to form the chelate dye with Zn²⁺).

In general formula (2), R₁₁ is an optionally substituted liner or branched alkyl group or an optionally substituted cycloalkyl group. Examples of R₁₁ are the same as those of R₁ in general formula (1).

R₁₂ is an optionally substituted linear or branched alkyl group. Examples of R₁₂ include linear alkyl groups having 1-6 carbon atoms, such as methyl, ethyl, propyl, butyl, pentyl, and hexyl; and branched alkyl groups having 3-8 carbon atoms, such as isopropyl, sec-butyl, isobutyl, t-butyl, 2-ethylhexyl, cyclopropyl, and cyclohexylmethyl.

These alkyl groups may have been substituted. Examples of the substituents include halogen atoms, alkoxy groups, alkoxycarbonyl groups, alkylcarbonyloxy groups, alkylcarbonyl groups, and dialkylamino groups. Specific examples thereof include halogen atoms such as fluorine, chlorine, bromine, and iodine; alkoxy groups having 1-8 carbon atoms, such as methoxy, ethoxy, n-propoxy, isopropoxy, n-butoxy, isobutoxy, sec-butoxy, t-butoxy, n-pentyloxy, cyclopropyloxy, cyclohexylmethyloxy, and 2-ethylhexyloxy; alkoxycarbonyl groups having 2-9 carbon atoms, such as methoxycarbonyl, ethoxycarbonyl, n-propoxycarbonyl, isopropoxycarbonyl, n-butoxycarbonyl, isobutoxycarbonyl, sec-butoxycarbonyl, t-butoxycarbonyl, n-pentyloxycarbonyl, cyclopropyloxycarbonyl, cyclohexylmethoxycarbonyl, and 2-ethylhexyloxycarbonyl; alkylcarbonyloxy groups having 2-9 carbon atoms, such as methylcarbonyloxy, ethylcarbonyloxy, n-propylcarbonyloxy, isopropylcarbonyloxy, n-butylcarbonyloxy, isobutylcarbonyloxy, sec-butylcarbonyloxy, t-butylcarbonyloxy, n-pentylcarbonyloxy, cyclopropylcarbonyloxy, cyclohexylmethylcarbonyloxy, and 2-ethylhexylcarbonyloxy; alkylcarbonyl groups having 2-9 carbon atoms, such as acetyl, propionyl, butyryl, isobutyryl, valeryl, isovaleryl, 2-methylbutyryl, pivaloyl, hexanoyl, cyclopropylcarbonyl, cyclohexylmethylcarbonyl, and 2-ethylhexylcarbonyl; and dialkylamino groups having 2-16 carbon atoms, such as dimethylamino, diethylamino, dipropylamino, diisopropylamino, dibutylamino, diisobutylamino, di-t-butylamino, dihexylamino, ethylmethylamino, and butylpentylamino.

Preferred examples of R₁₂ among those are unsubstituted linear or branched alkyl groups. More preferred are unsubstituted linear alkyl groups having 1-6 carbon atoms or unsubstituted branched alkyl groups having 3-8 carbon atoms. In the case where an unsubstituted linear alkyl group is used, the number of carbon atoms therein is preferably 5 or smaller, more preferably 4 or smaller. The total number of carbon atoms in R₁₂ is preferably 7 or smaller, more preferably 6 or smaller, even more preferably 5 or smaller, especially preferably 4 or smaller. Especially preferably, R₁₂ is methyl, ethyl, propyl, isopropyl, or isobutyl.

R₁₃, R₁₄, R₁₅, R₁₆, R₁₇, and R₁₈ each independently represent a hydrogen atom or an optionally substituted linear or branched alkyl group. The linear or branched alkyl group preferably is an alkyl group having 1-6 carbon atoms, and especially preferably is an alkyl group having 1 or 2 carbon atoms. In the case where R₁₃, R₁₄, R₁₅, R₁₆, R₁₇, and R₁₈ each are an alkyl group having 1-2 carbon atoms, one or more of the hydrogen atoms bonded to the carbon atom(s) may have been replaced by another substituent (e.g., a halogen atom). However, the alkyl group preferably is an unsubstituted alkyl group, examples of which include methyl and ethyl. From the standpoints of ease of synthesis and conformation, it is most preferred that R₁₃, R₁₄, R₁₅, R₁₆, R₁₇, and R₁₈ each should be a hydrogen atom.

The azo dye compound represented by general formula (1) generally has a molecular weight of 2,000 or lower. In particular, when the azo dye compound has a molecular weight of 1,500 or lower, this compound is preferred because it has enhanced solubility in solvents and gives a dye excellent in light resistance, weatherability, and high-reflectance characteristics. Specific examples of the compound represented by general formula (1) include the following compounds (Ka-6 to Ka-34).

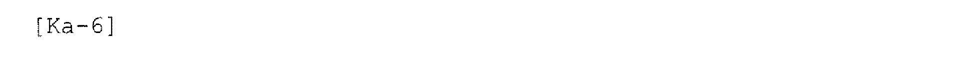

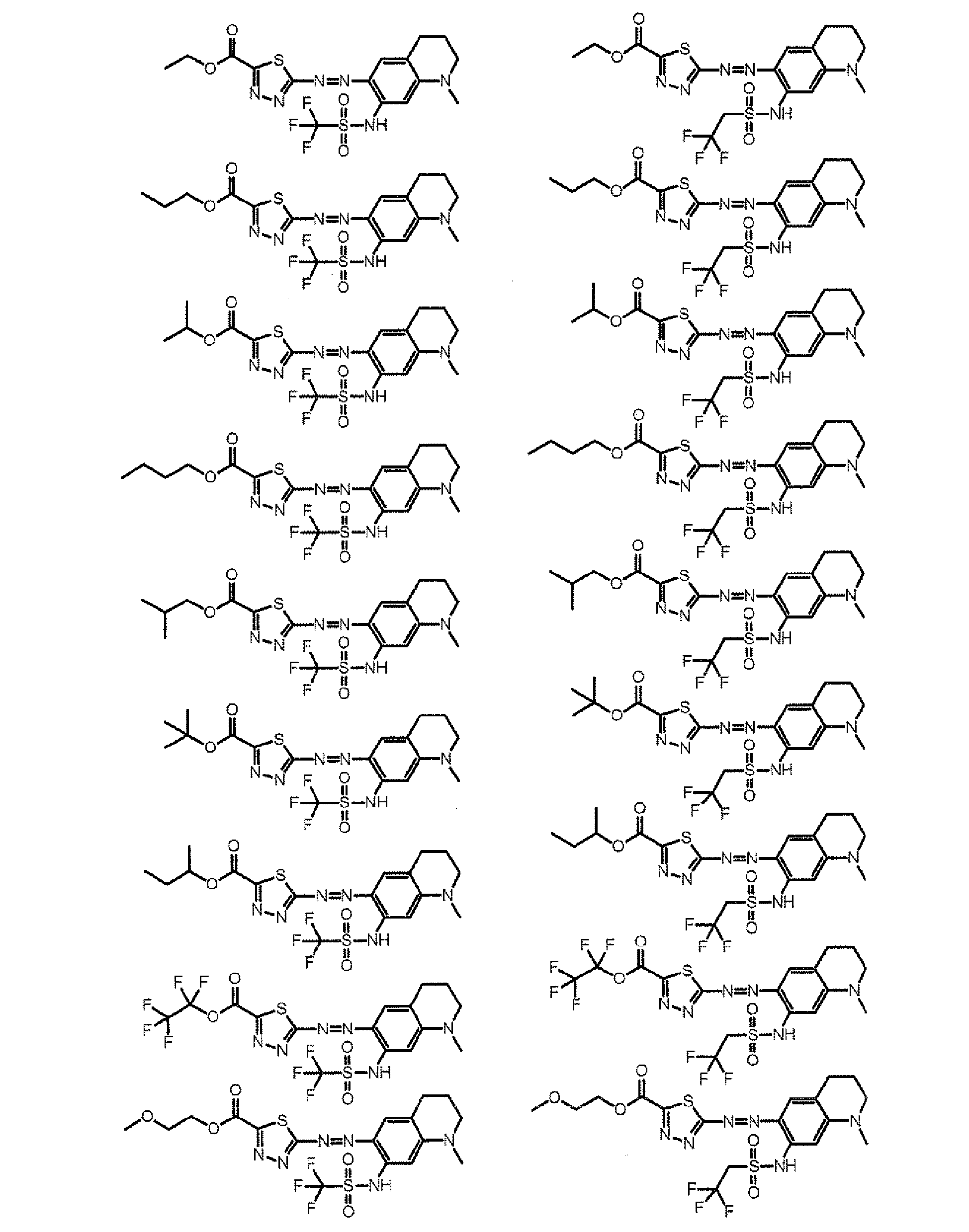

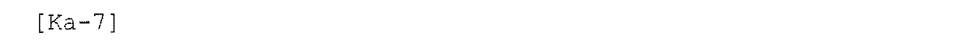

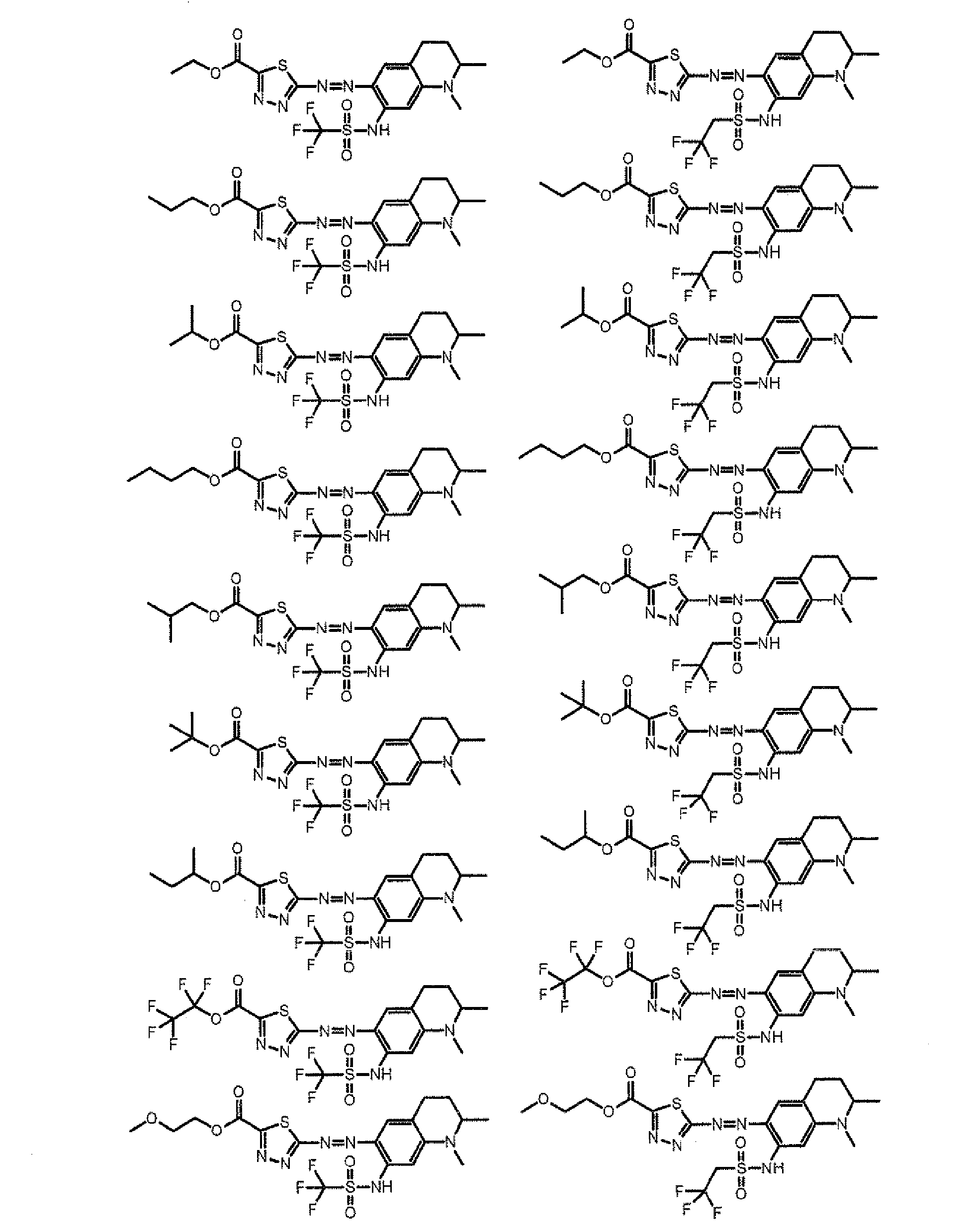

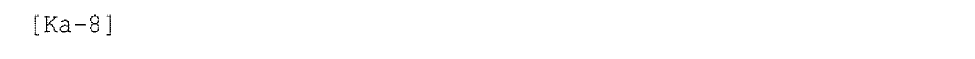

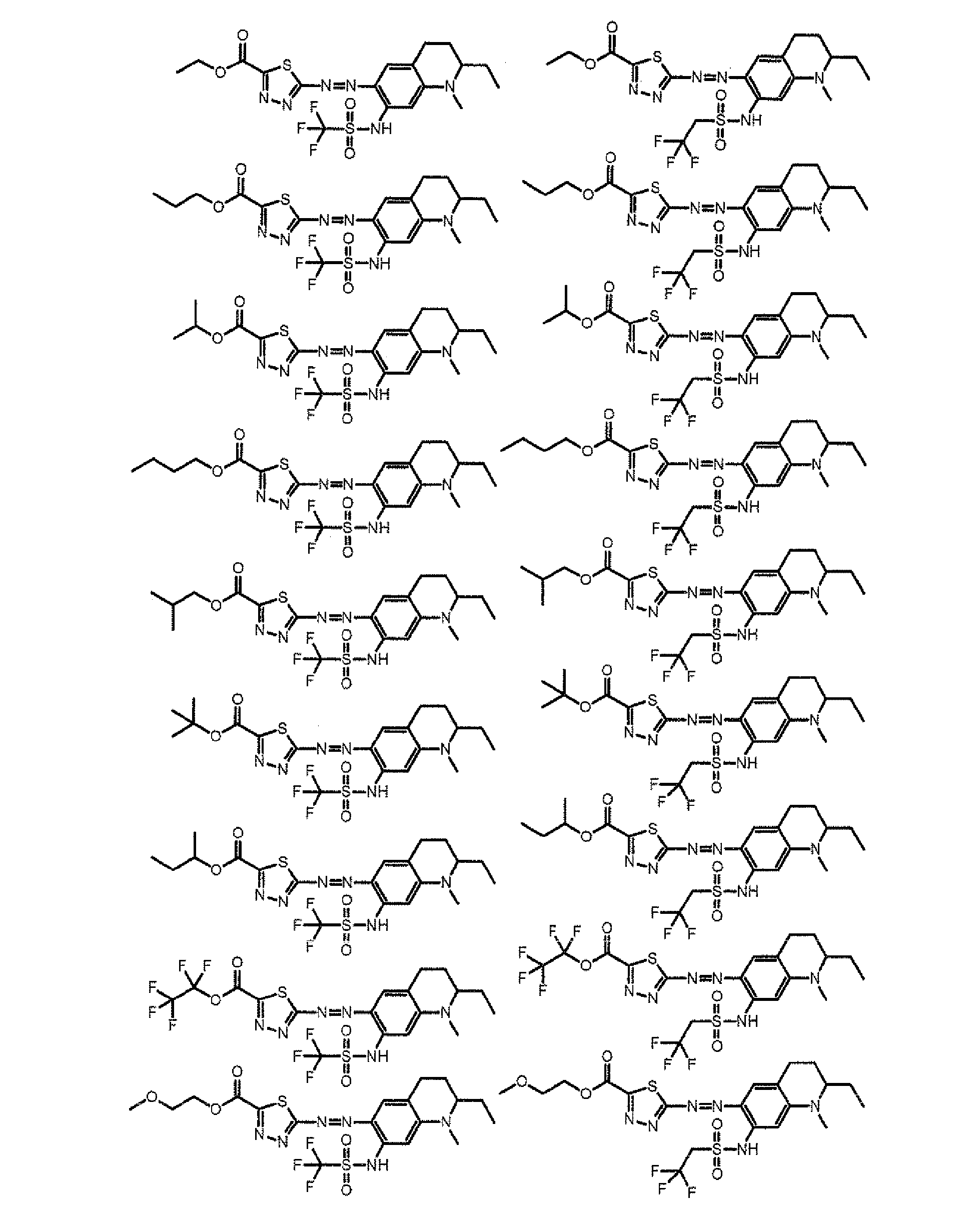

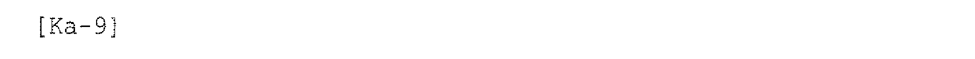

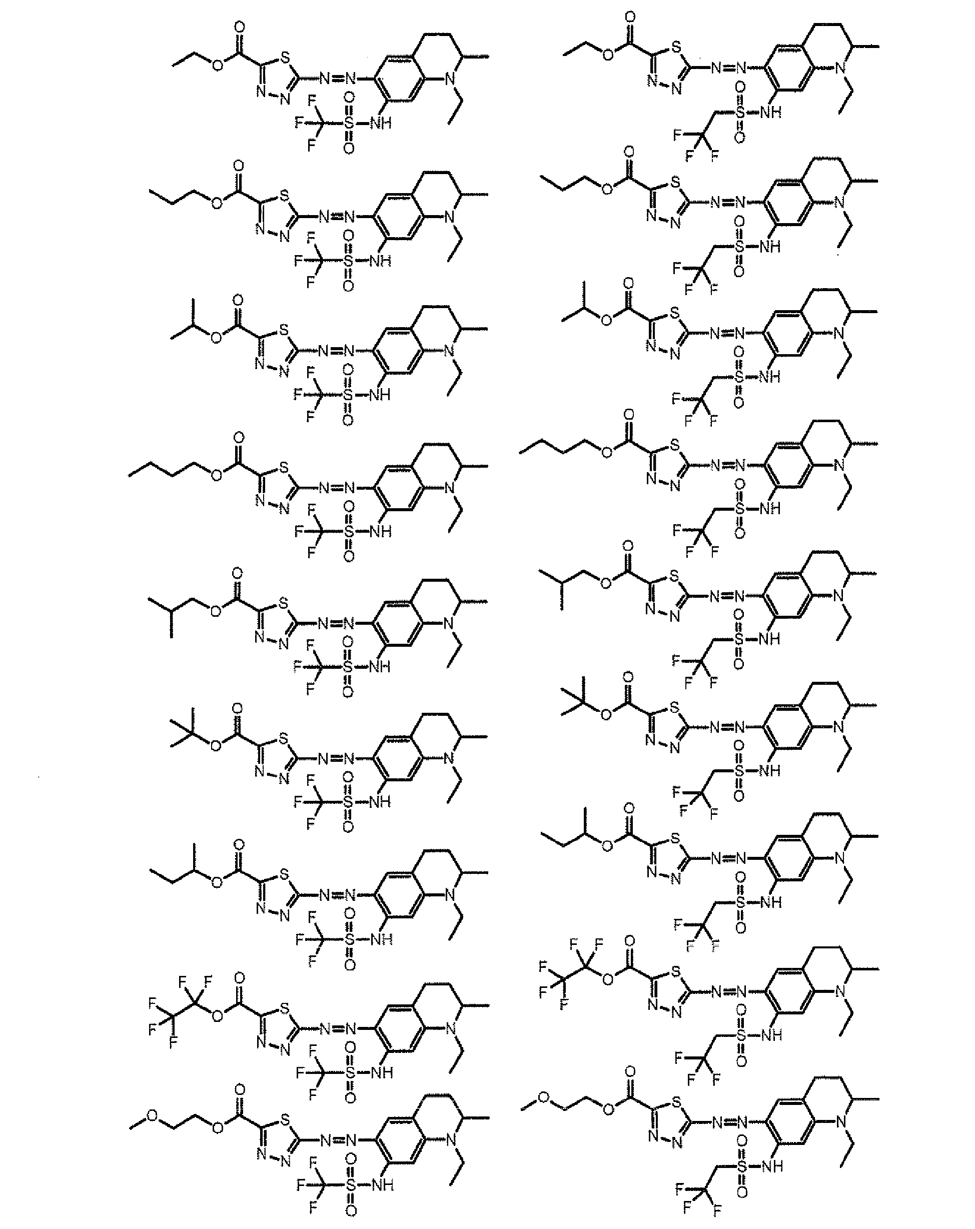

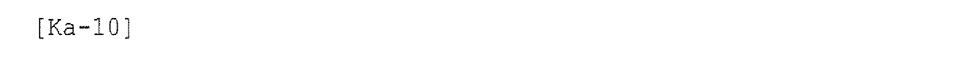

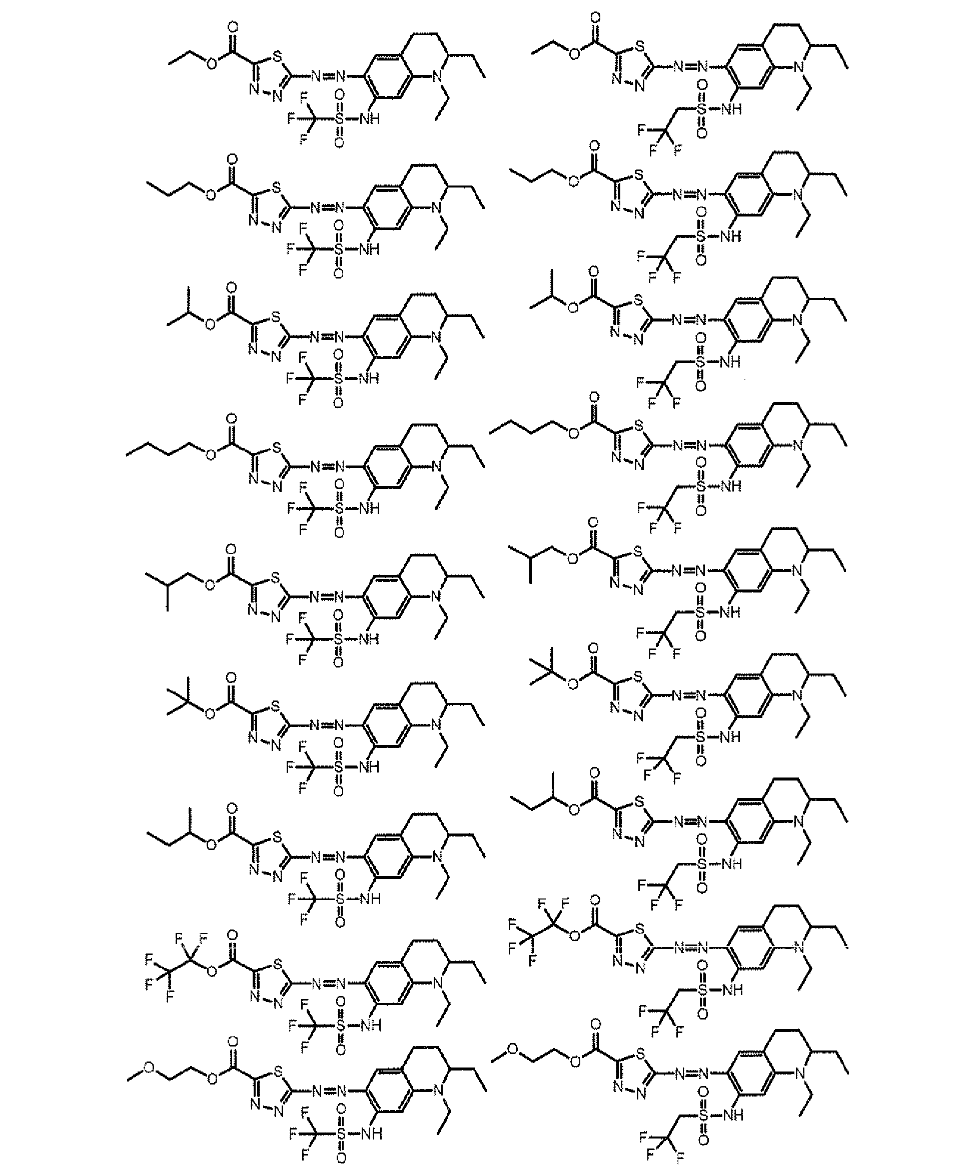

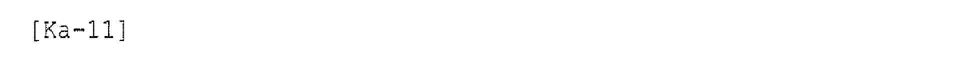

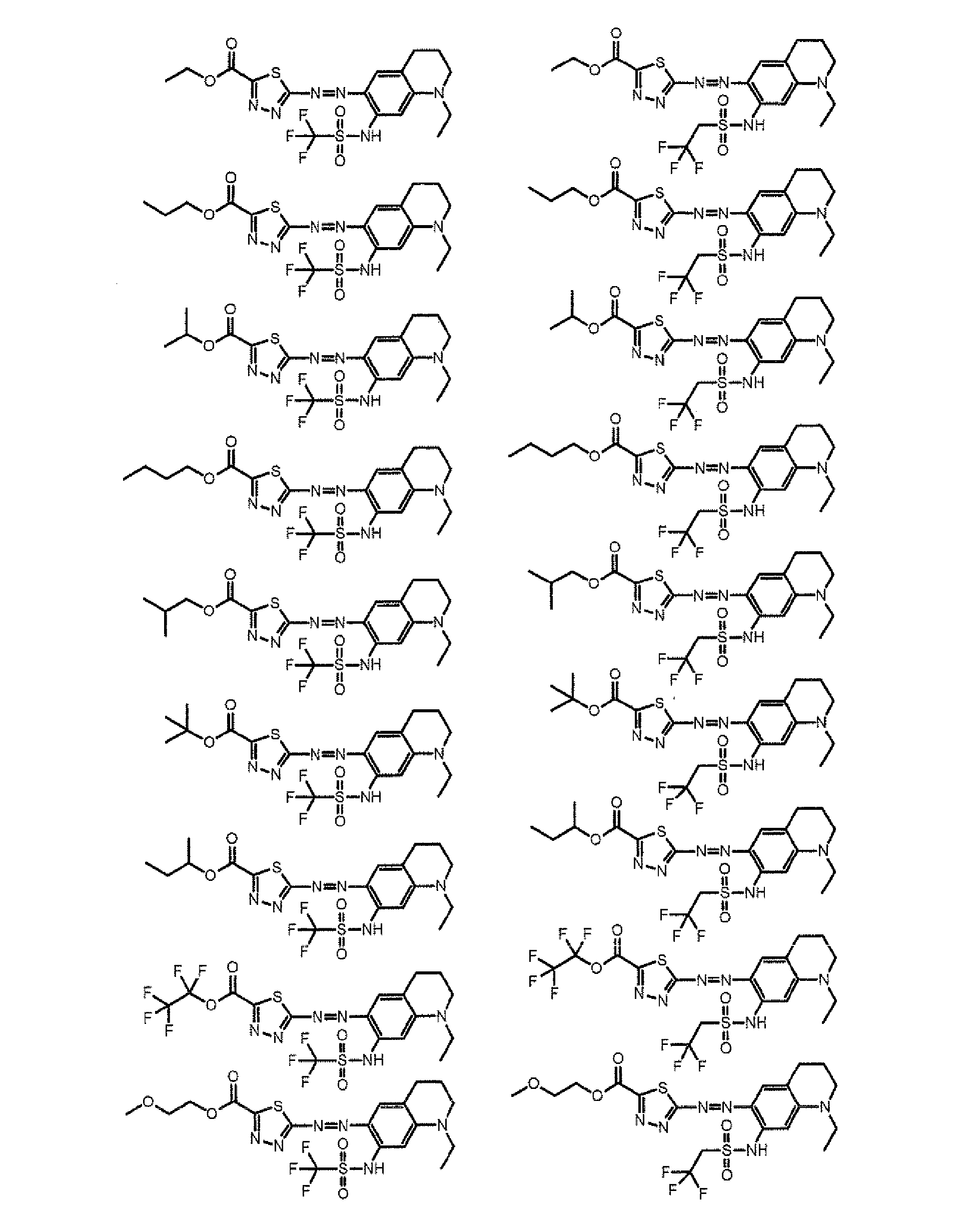

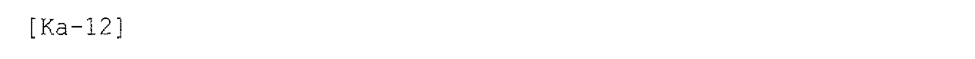

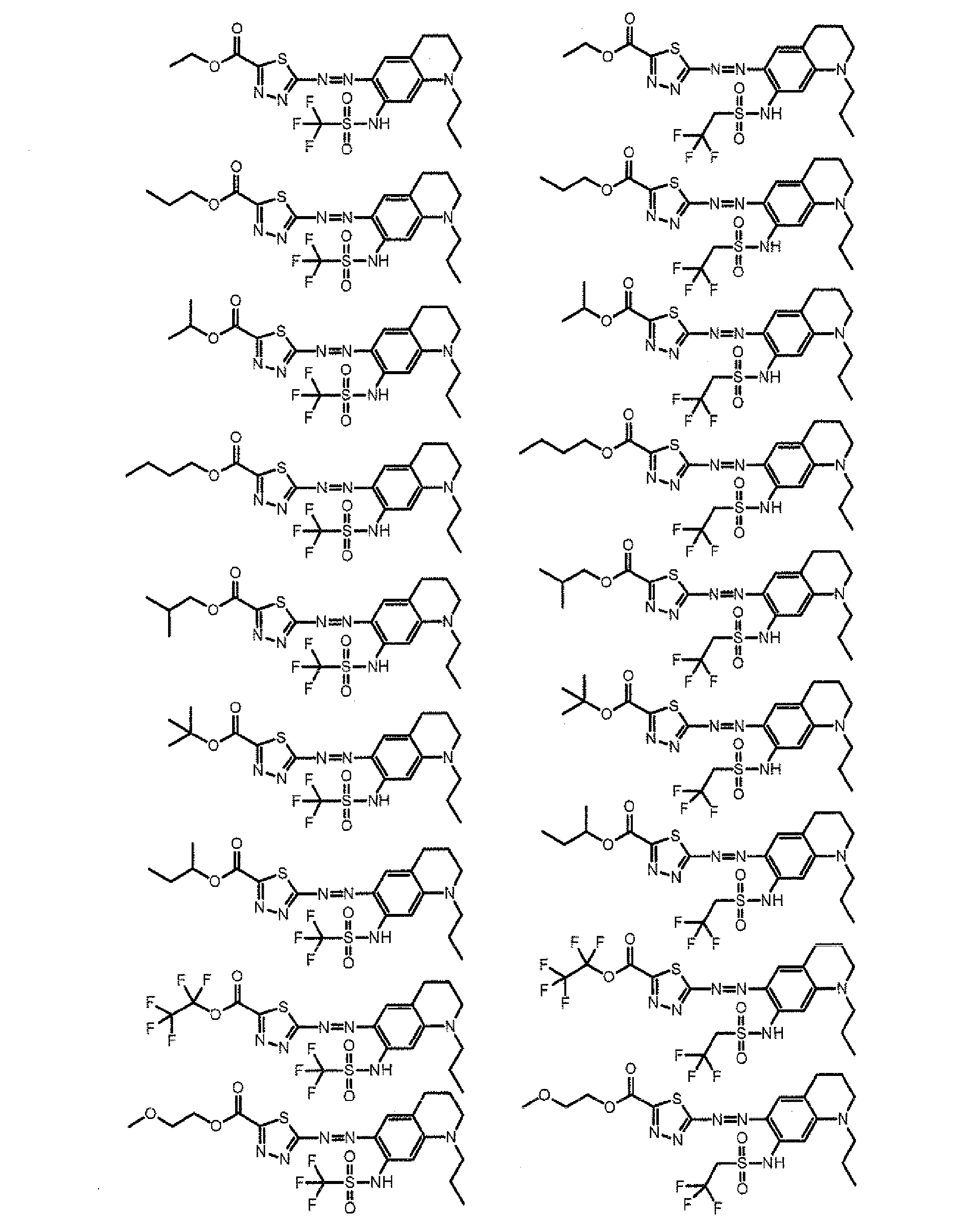

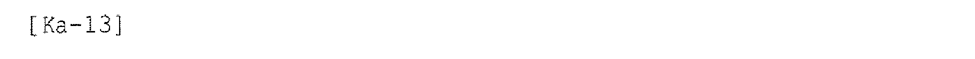

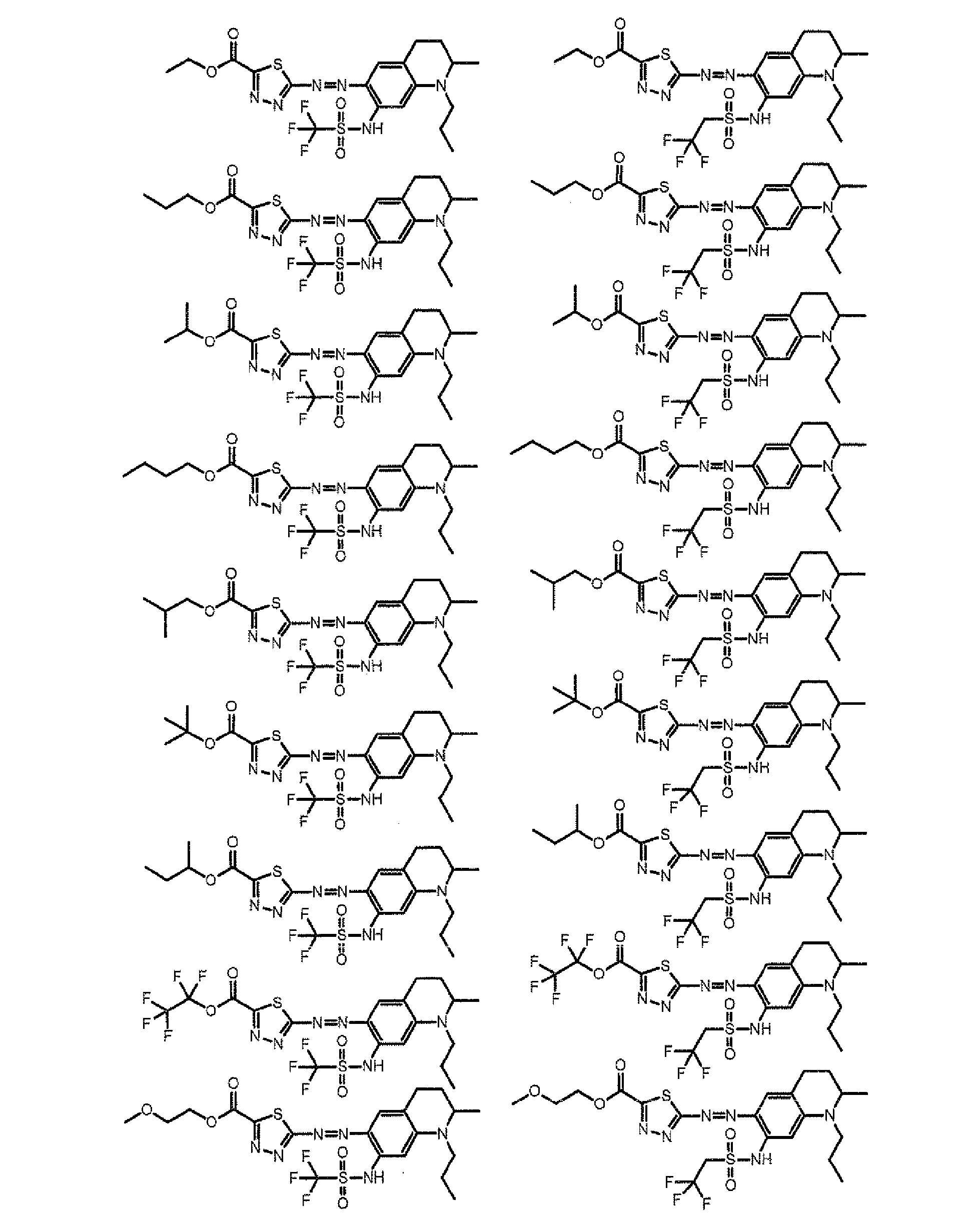

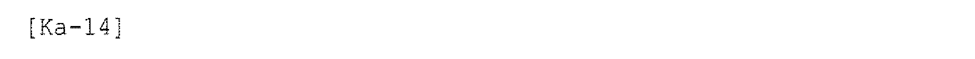

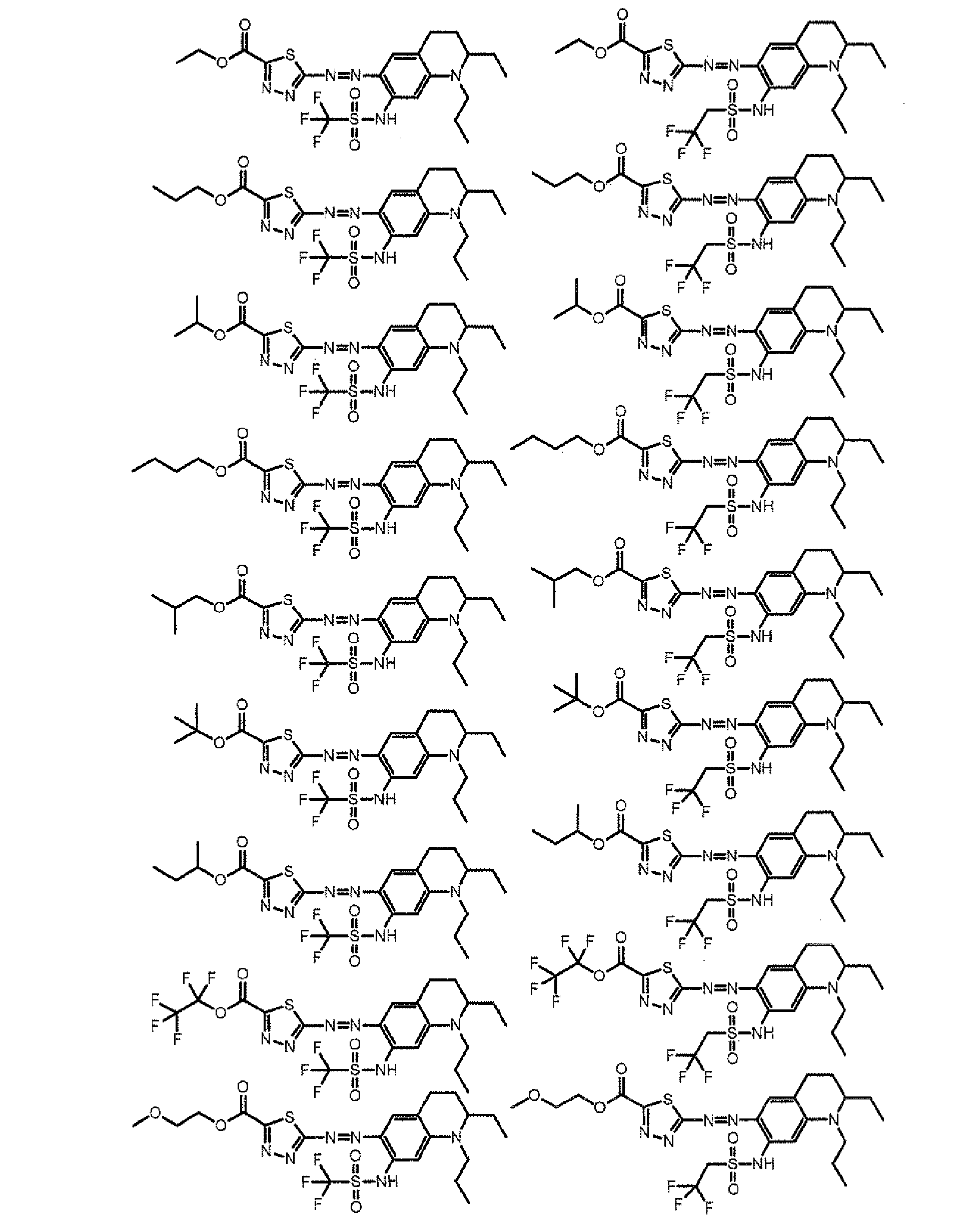

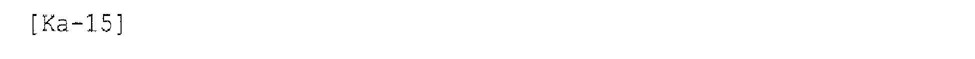

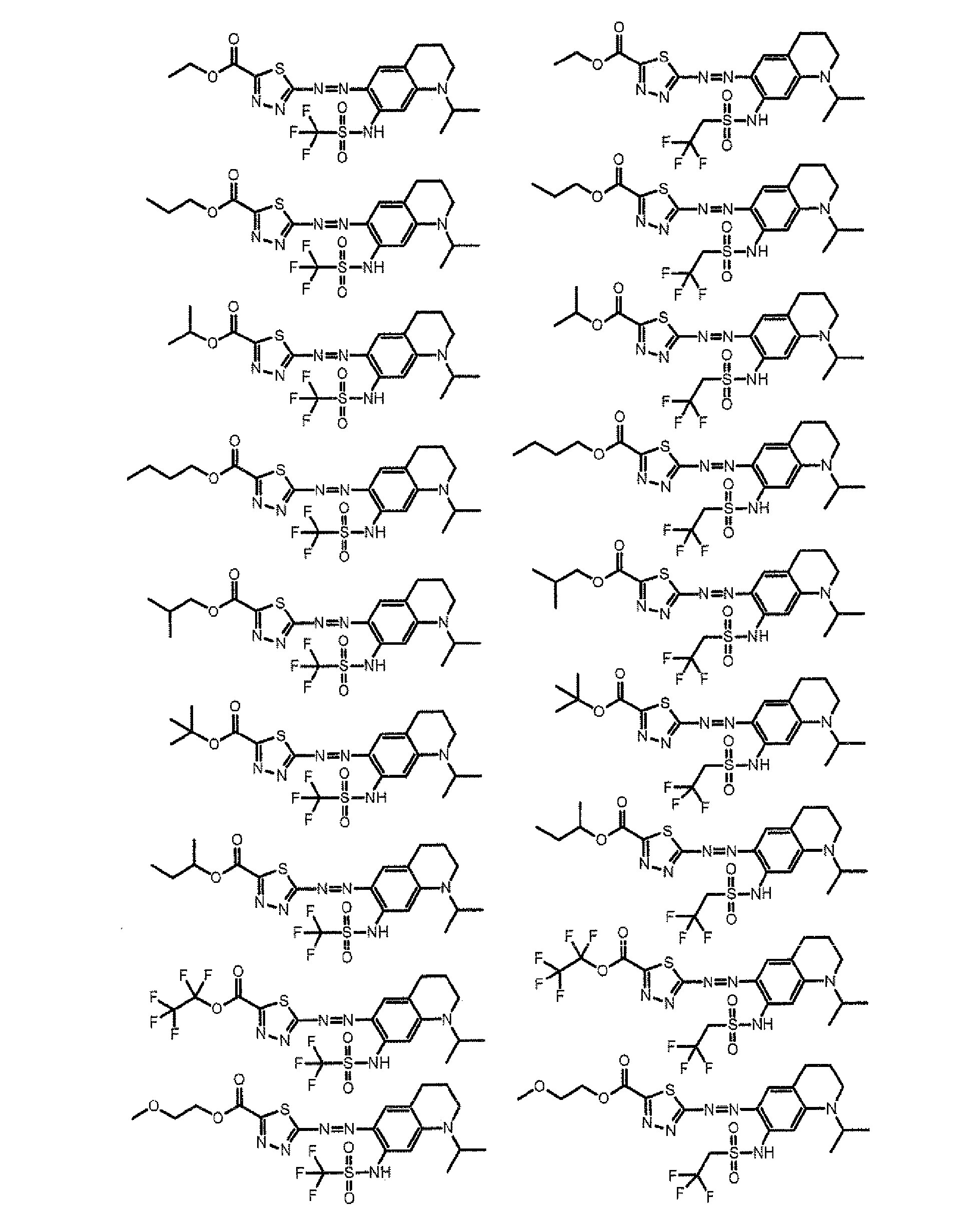

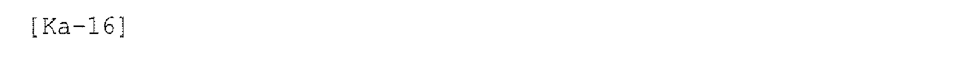

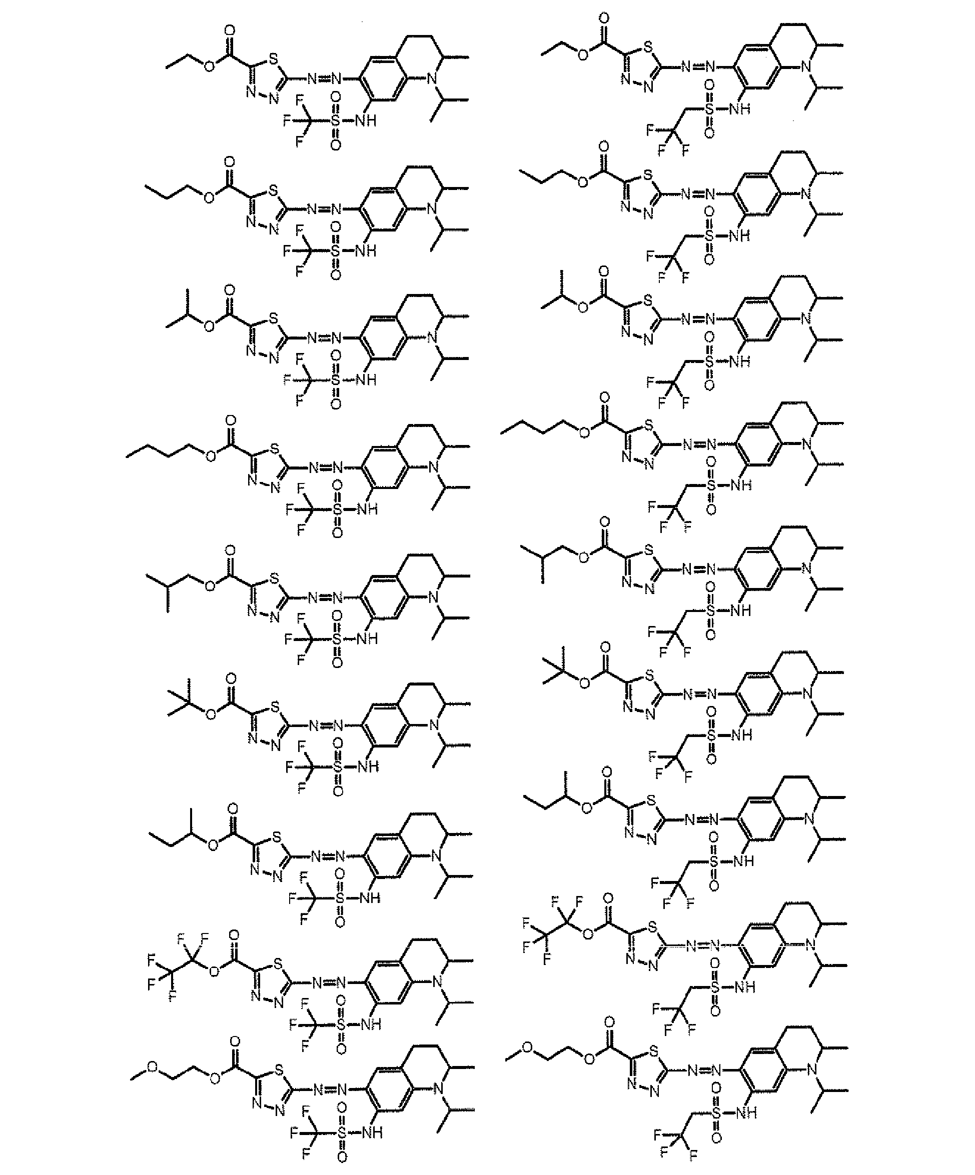

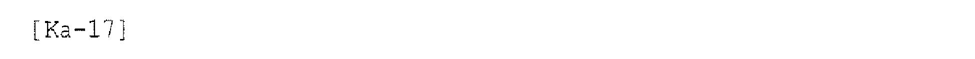

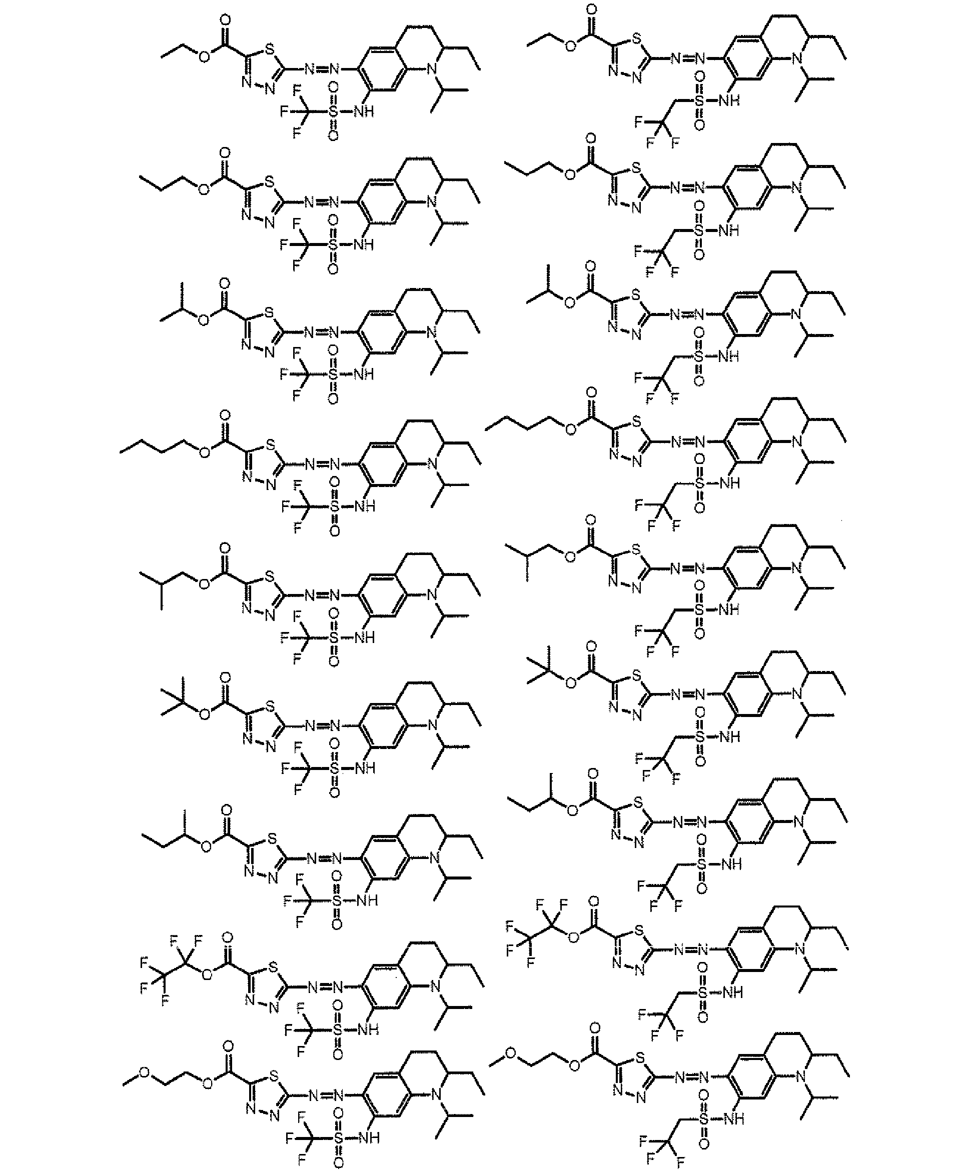

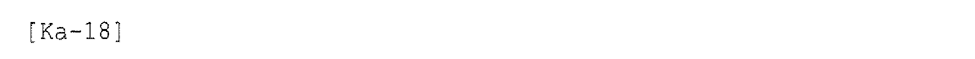

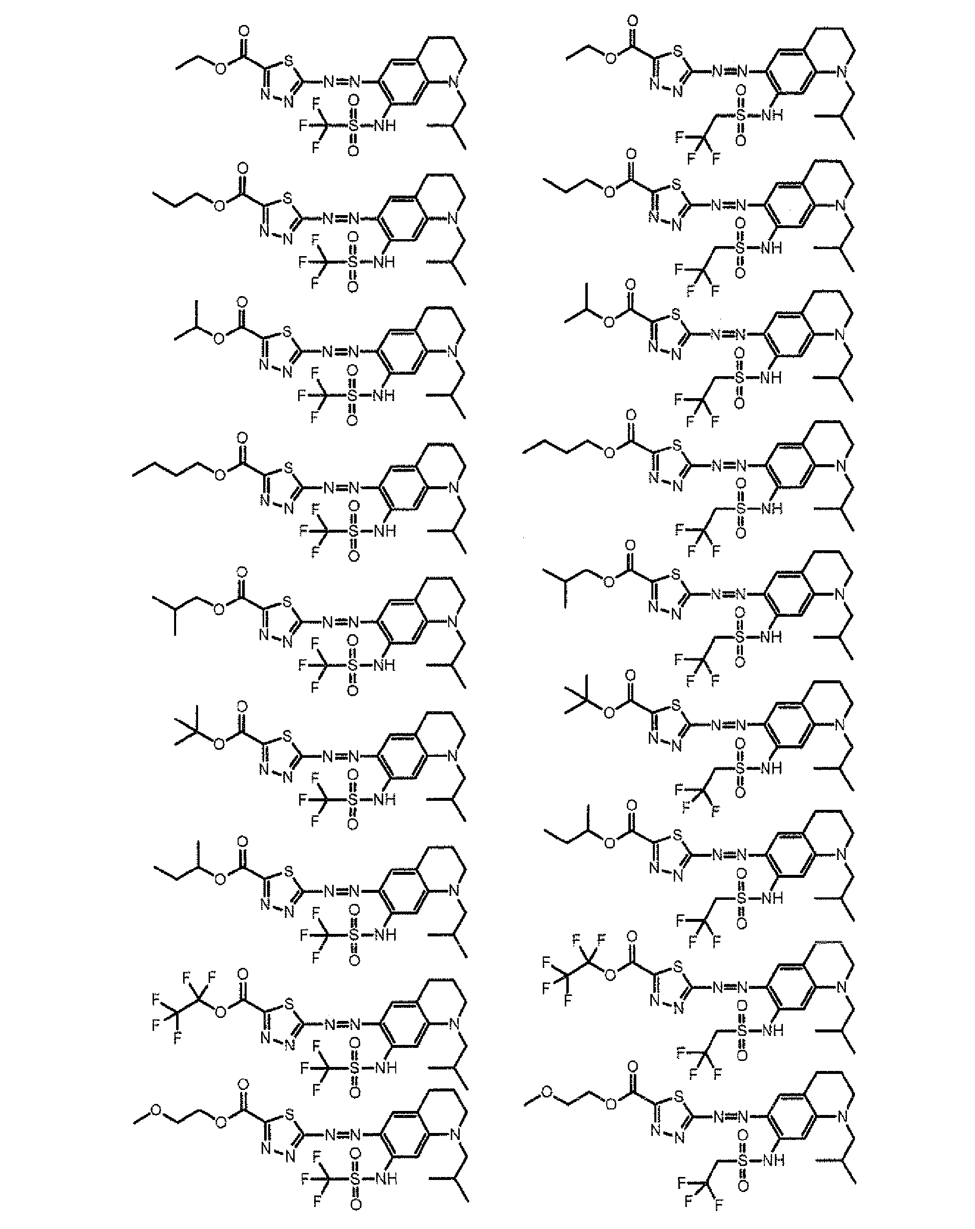

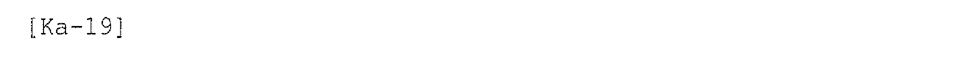

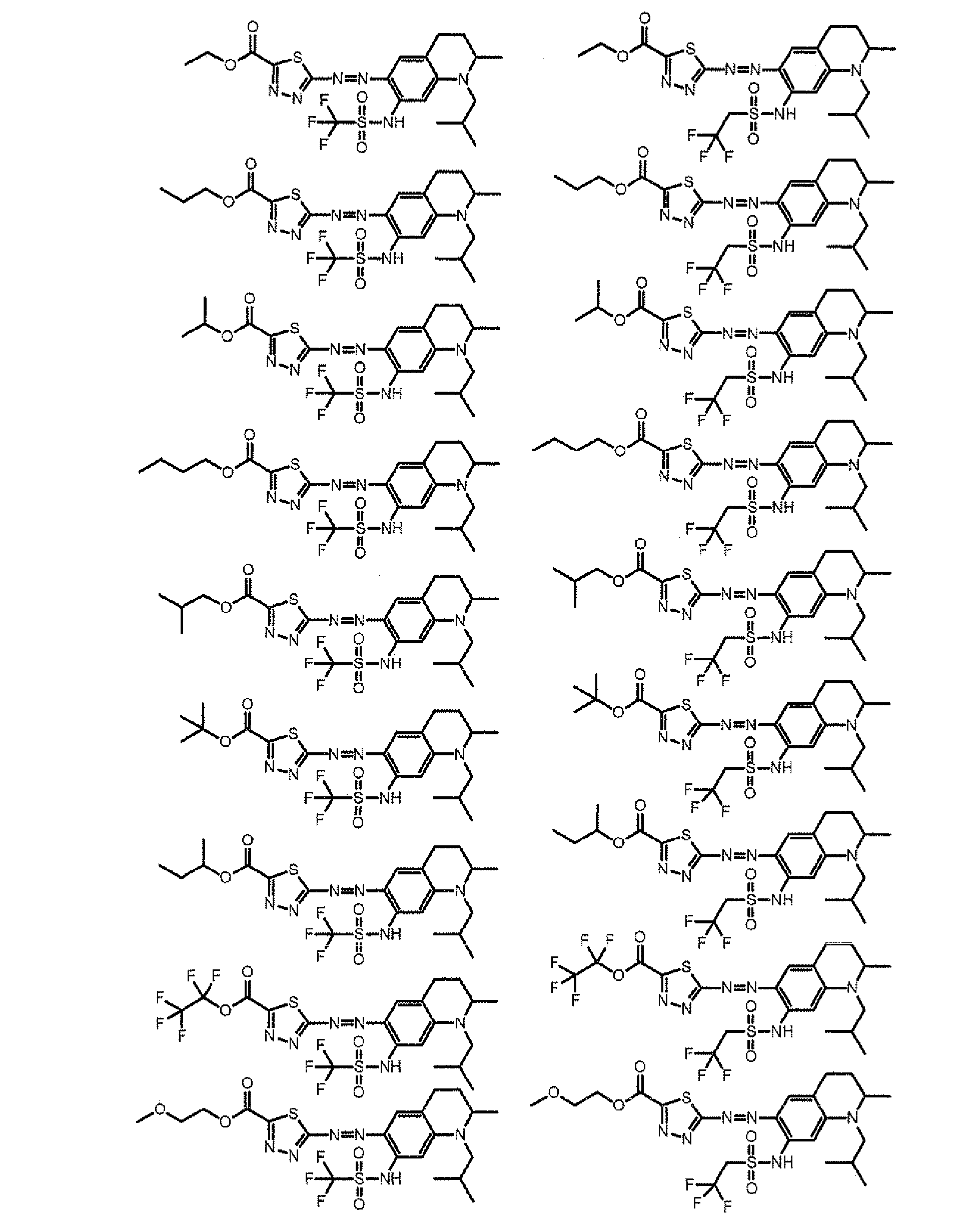

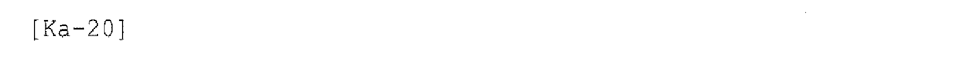

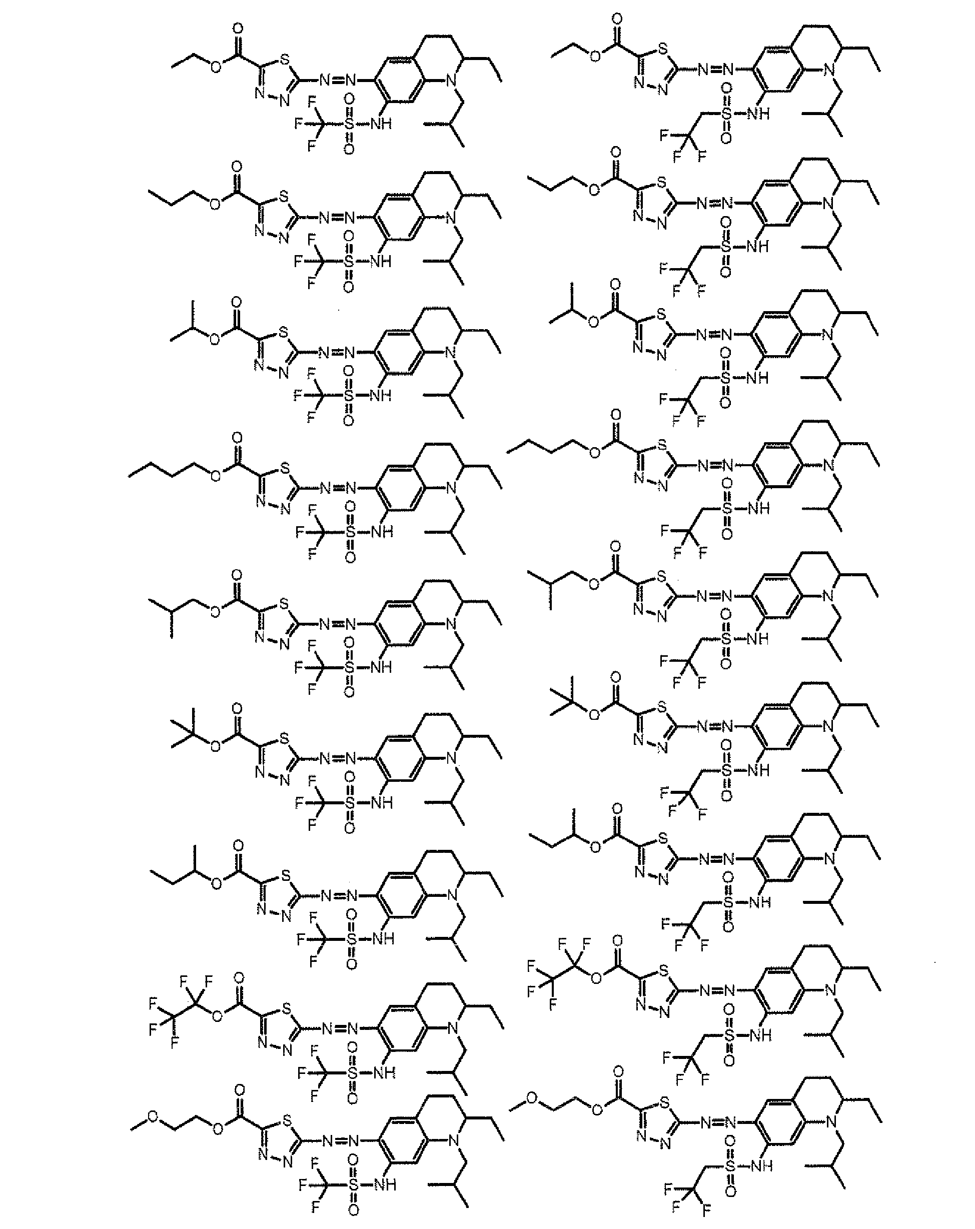

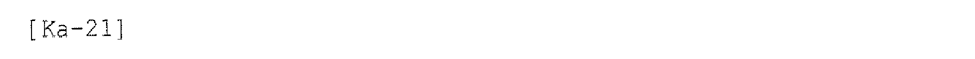

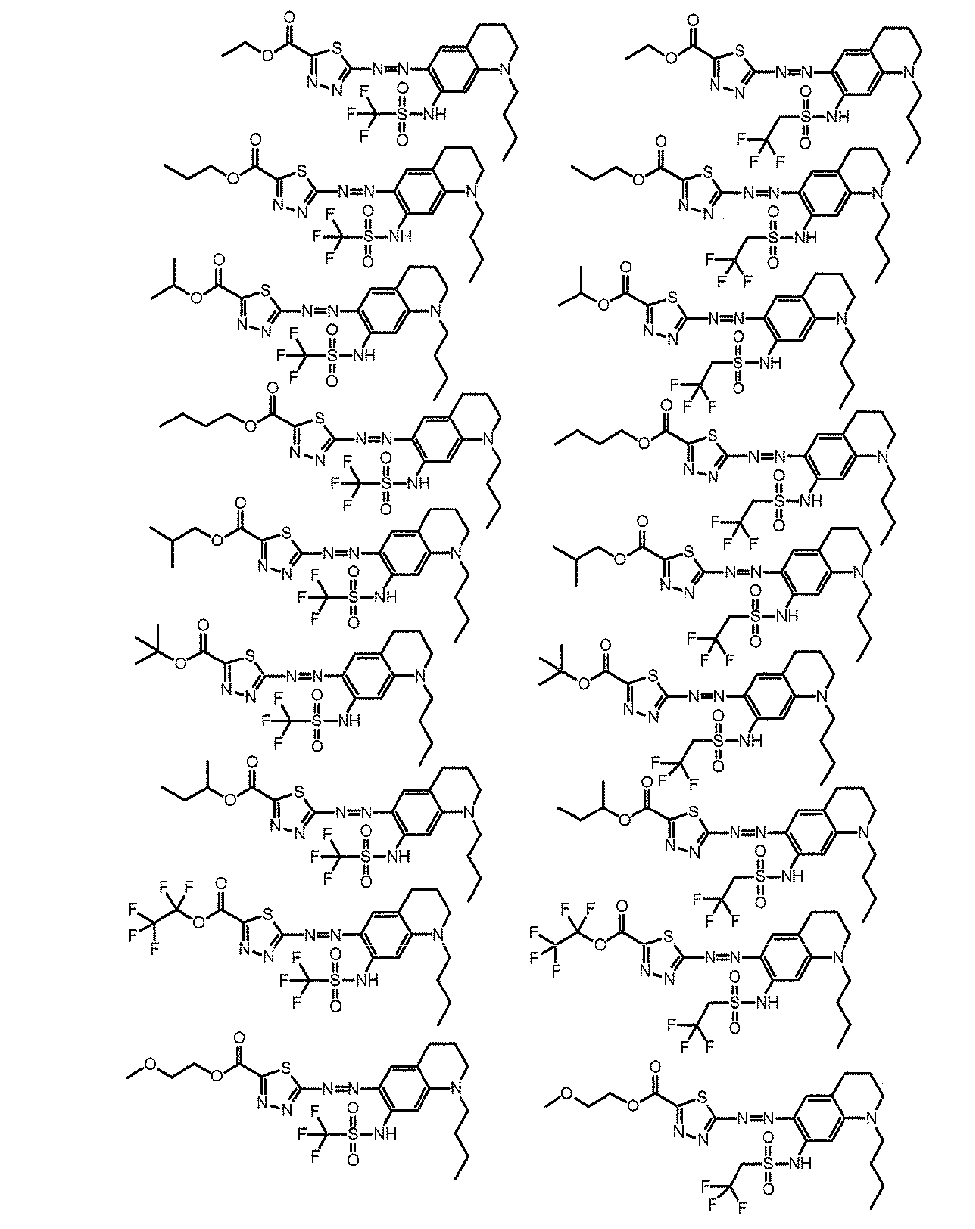

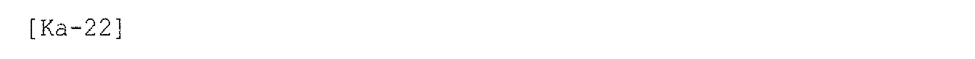

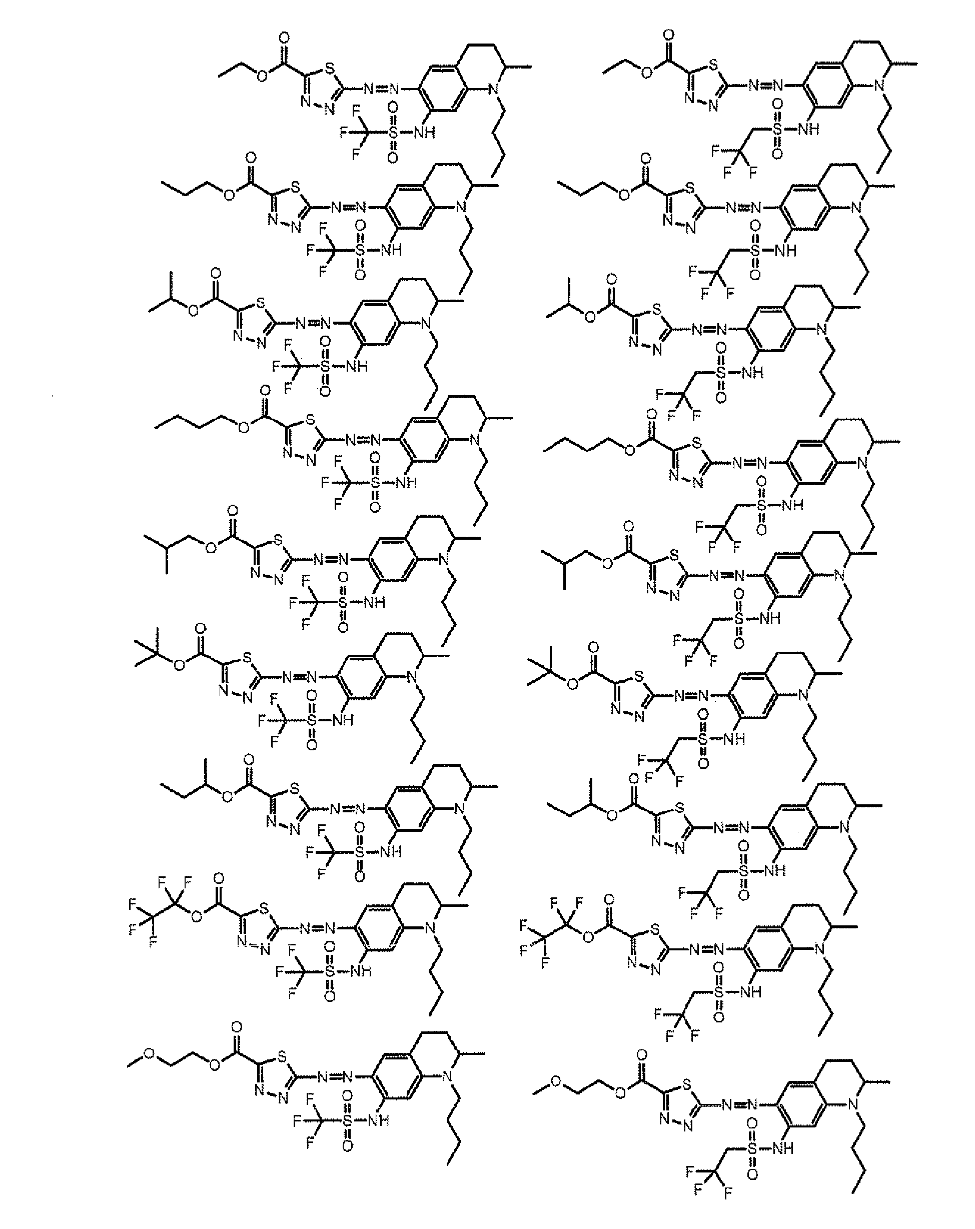

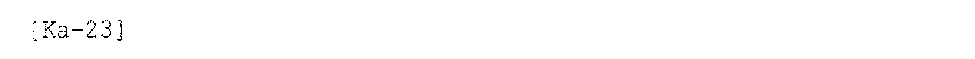

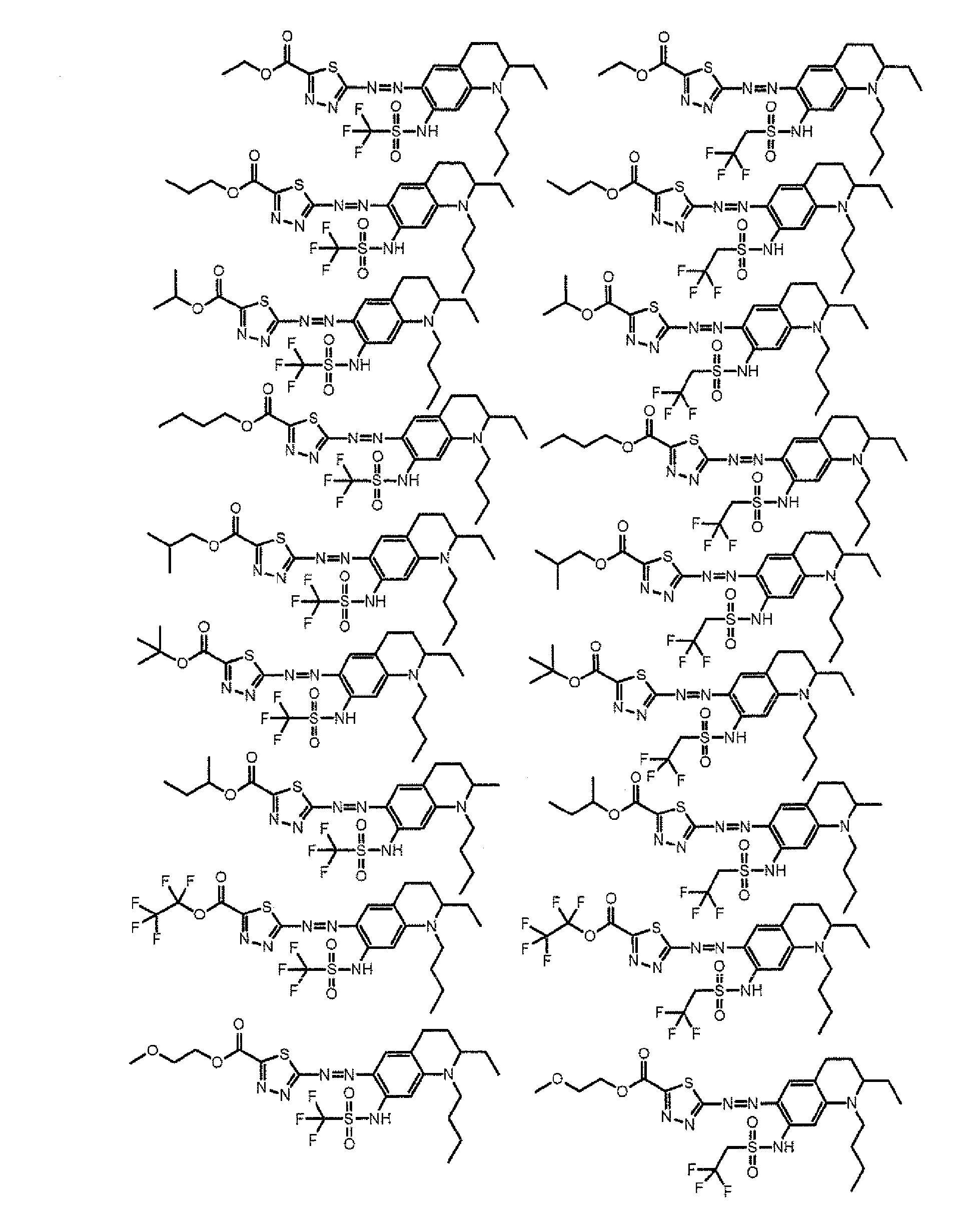

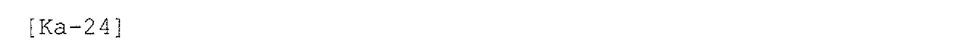

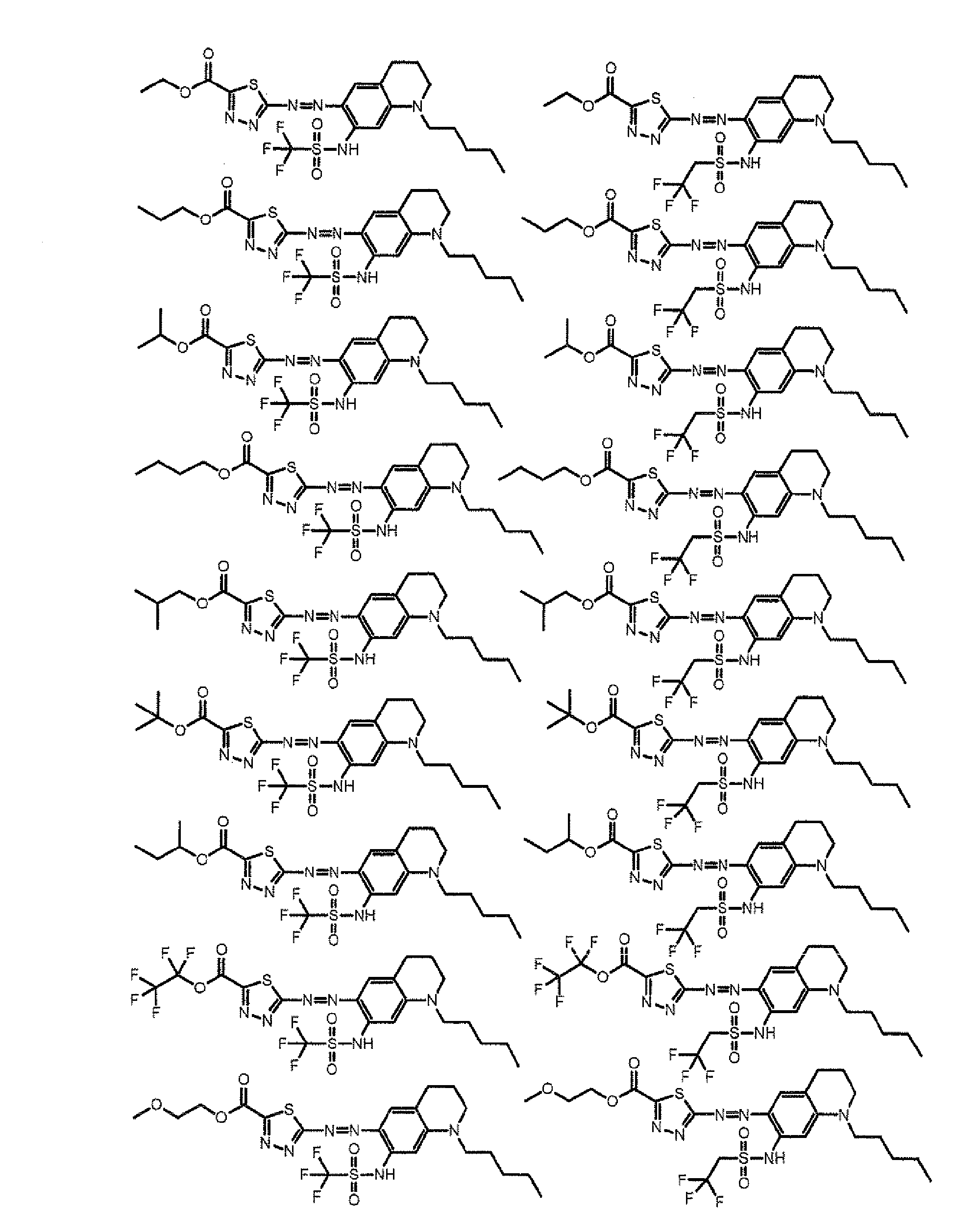

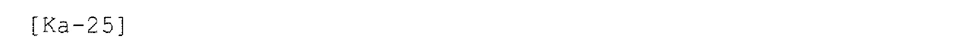

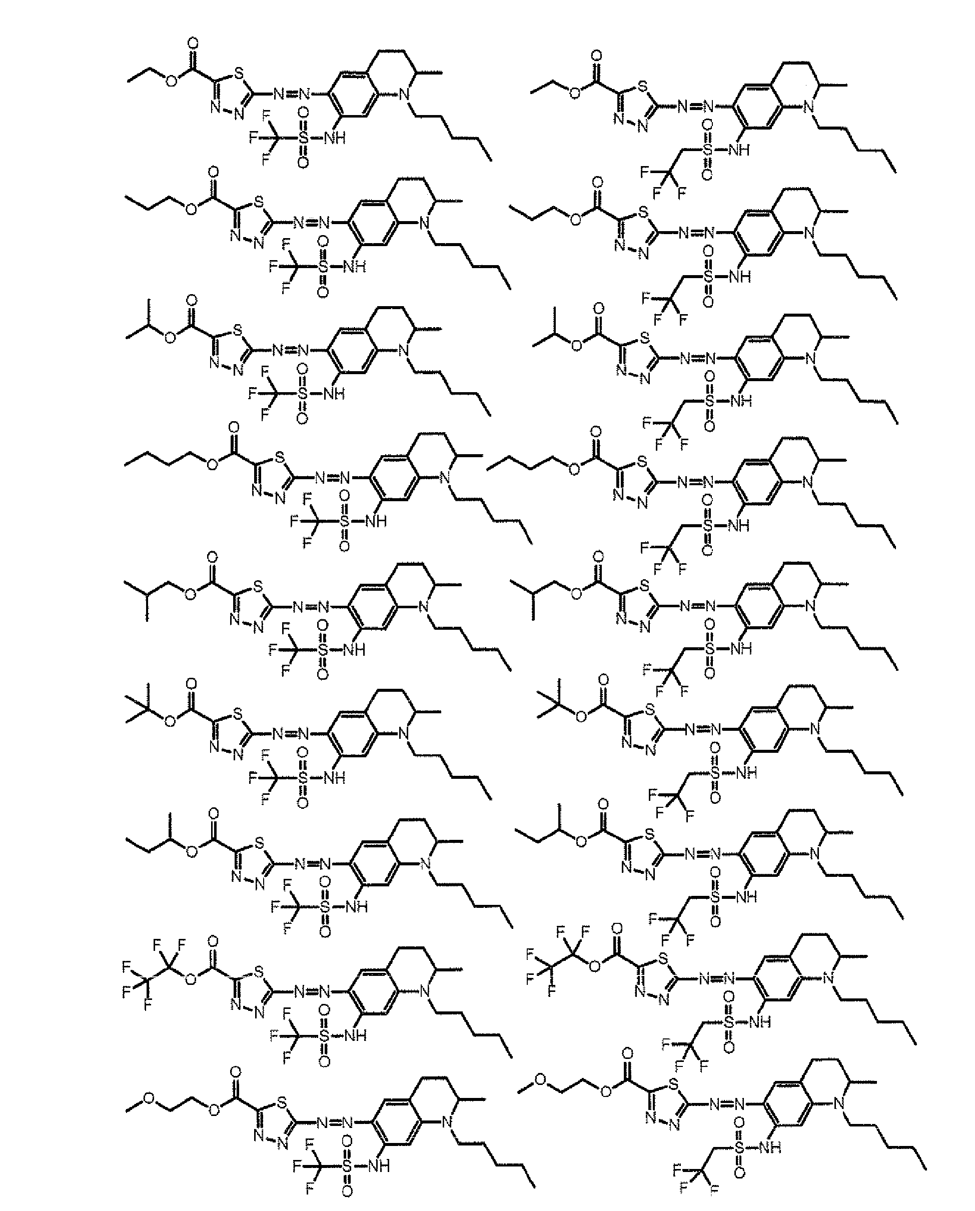

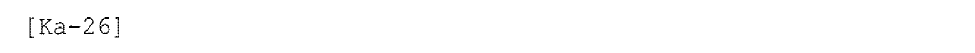

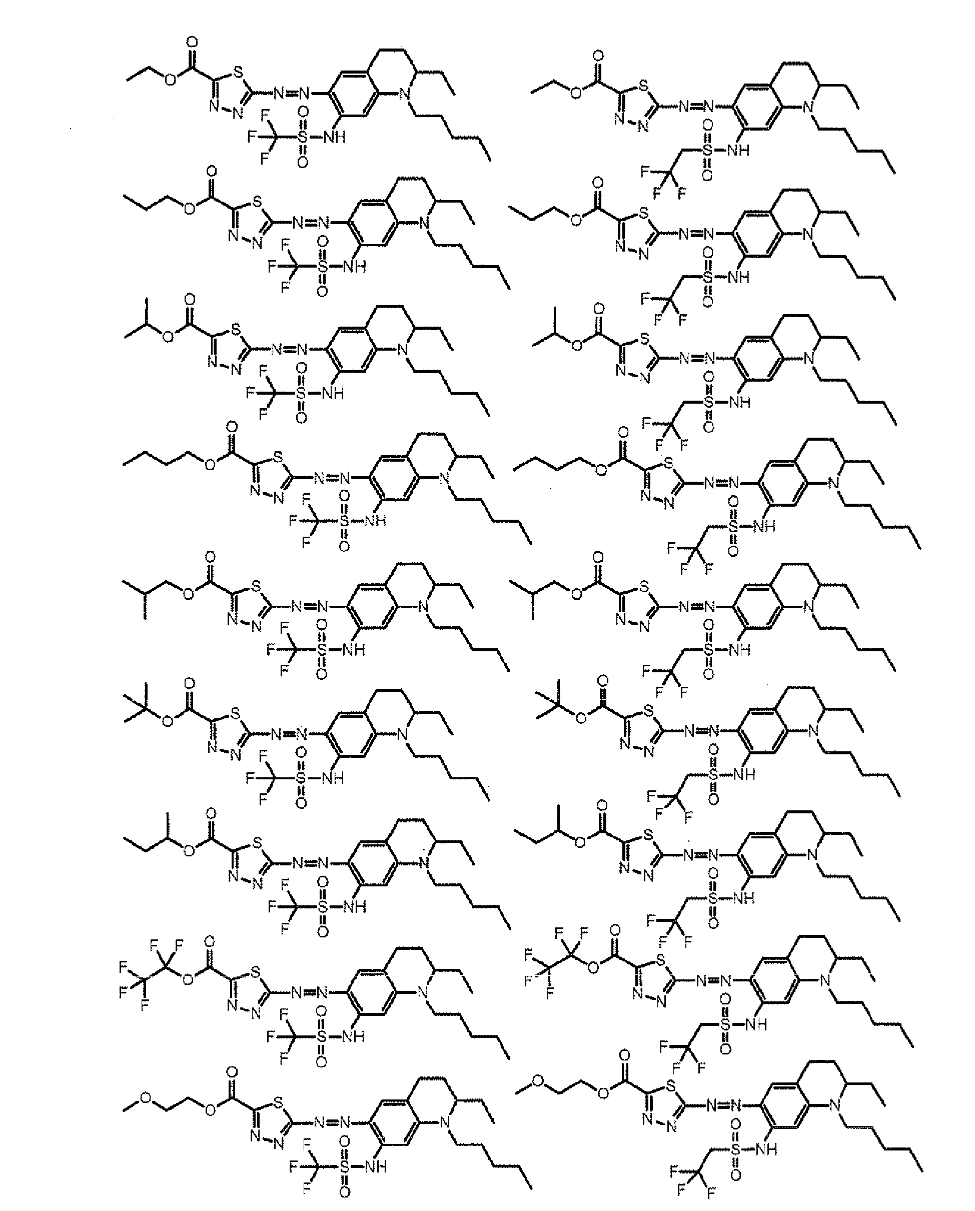

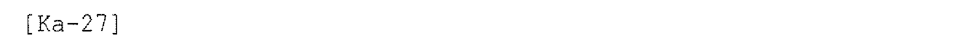

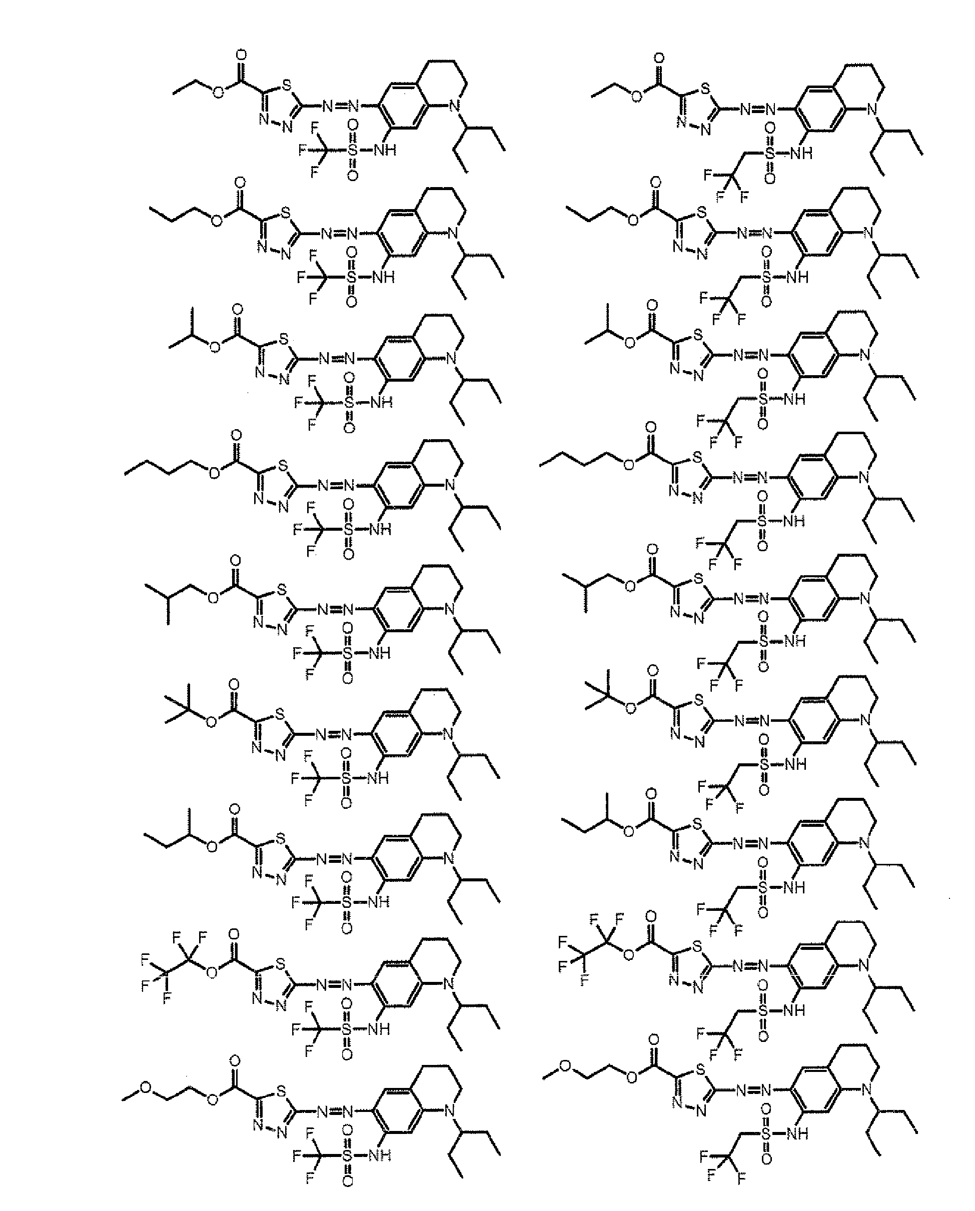

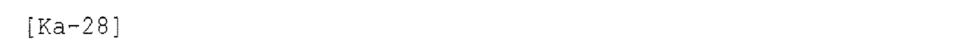

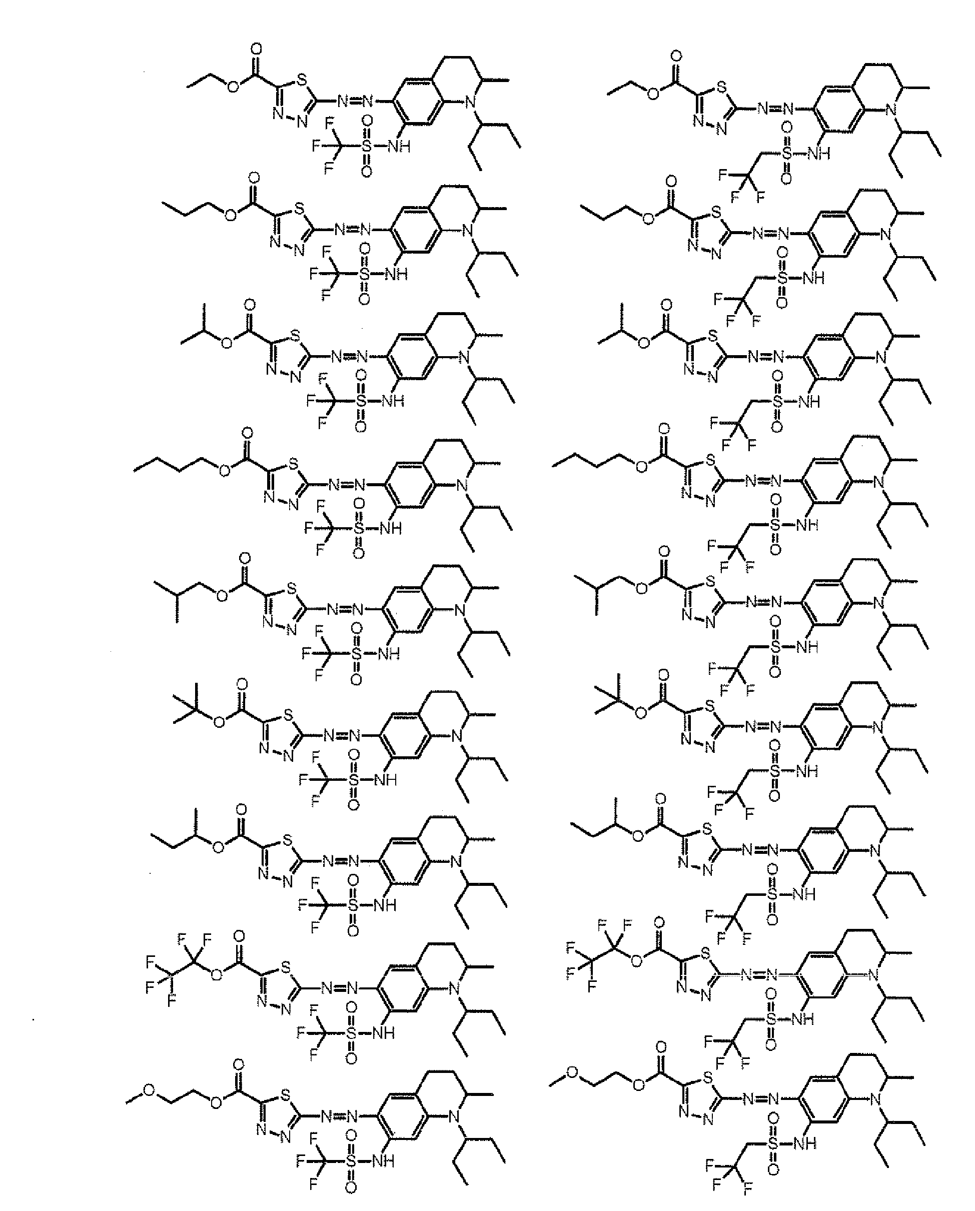

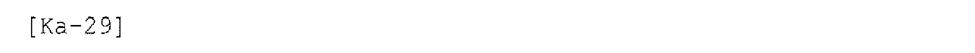

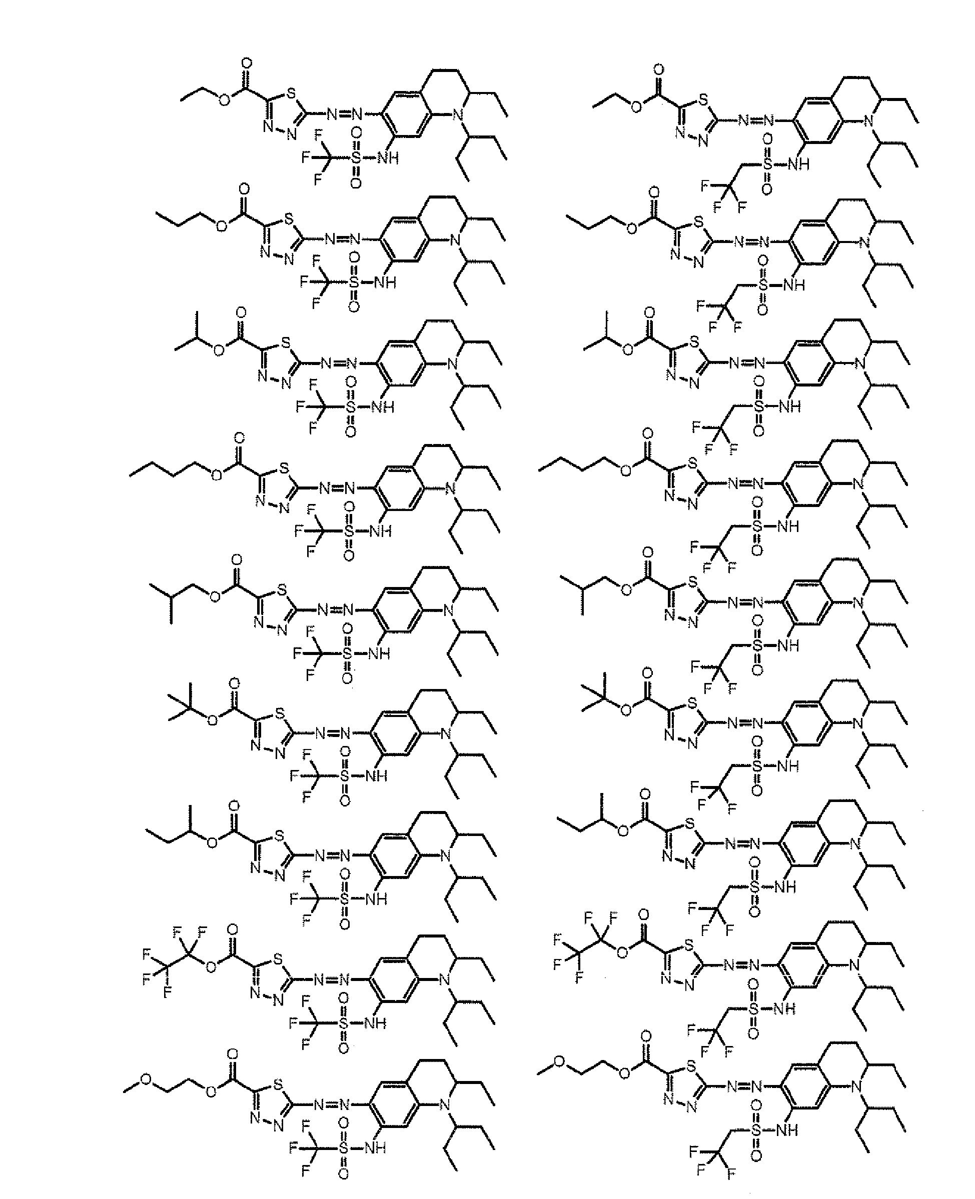

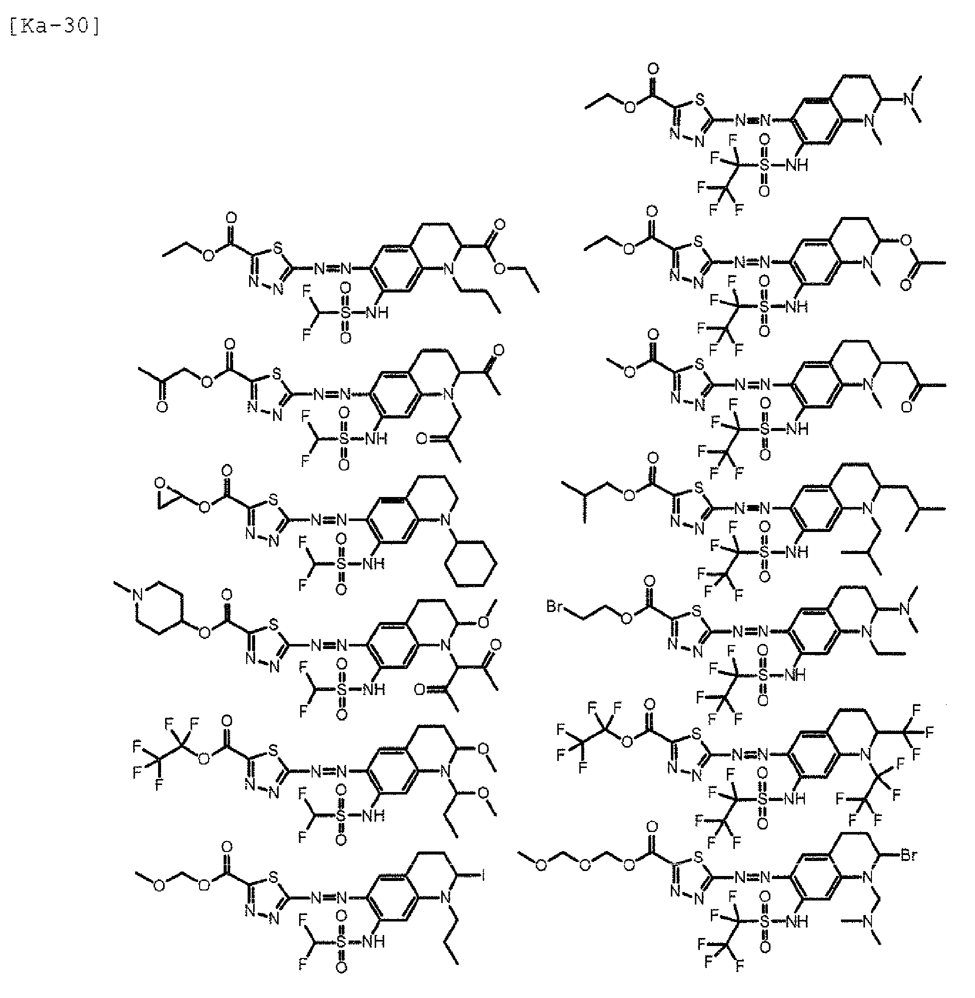

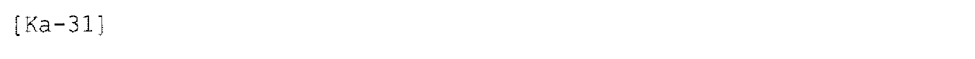

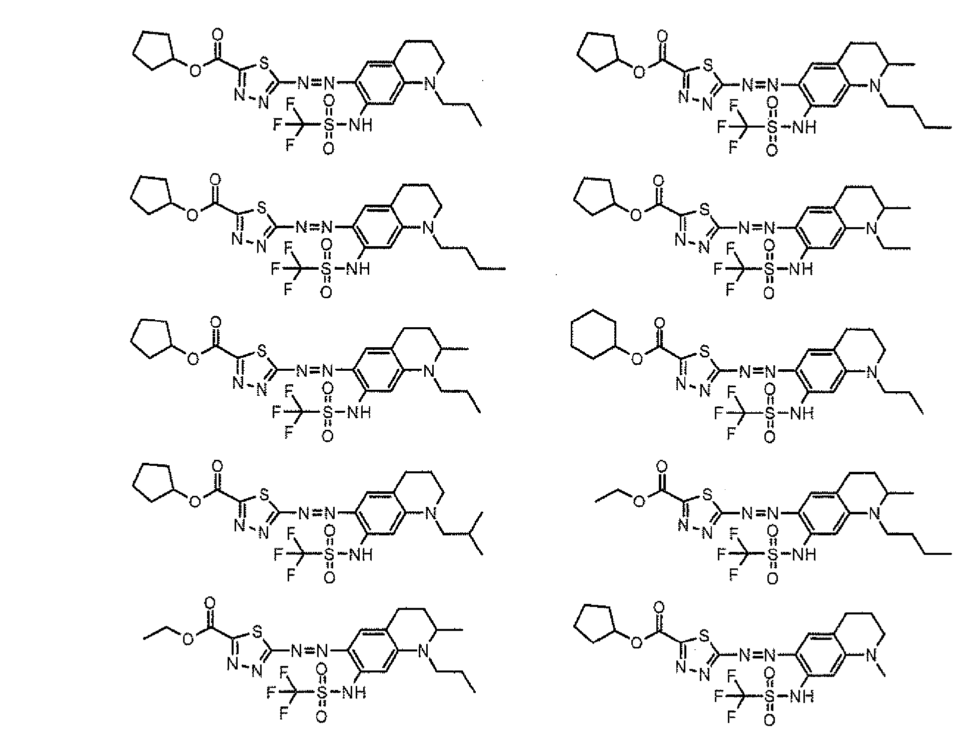

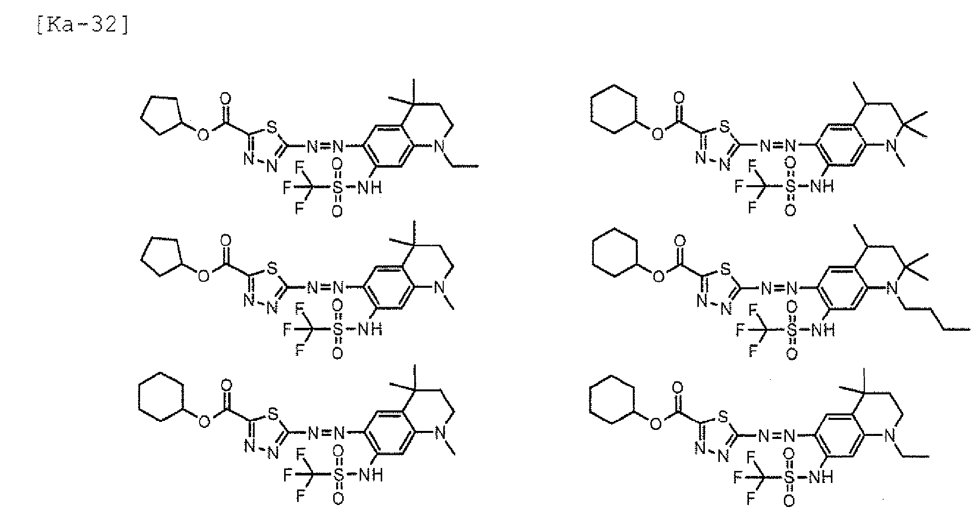

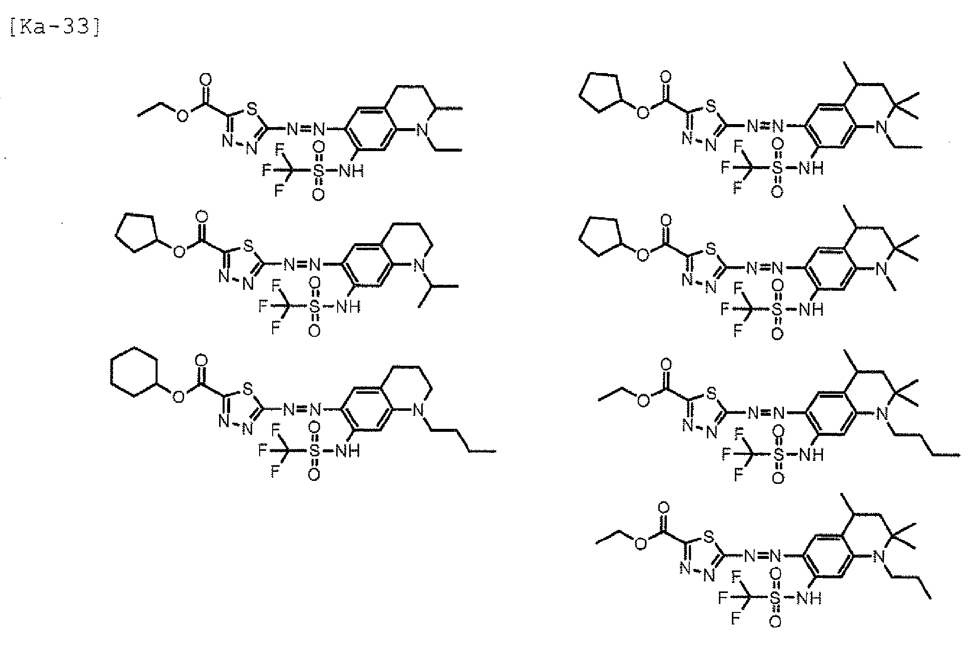

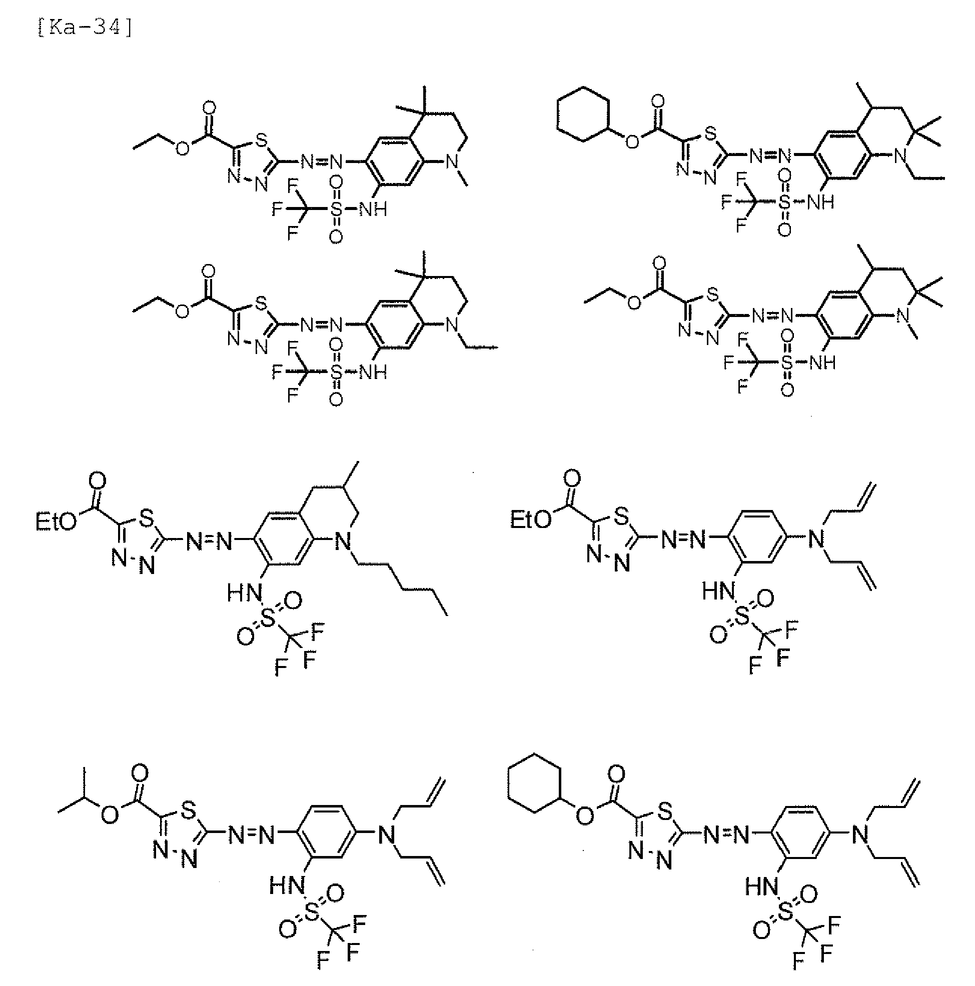

The azo metal chelate dye is not particularly limited except its chemical structure. However, from the standpoint of use in optical recording media capable of recording/reproducing with a short-wavelength laser light, which application will become necessary more and more in future, the dye more preferably is one which, when examined as a film of the dye alone, has an absorption maximum at a wavelength of 700 nm or shorter. Even more preferred is a dye having an absorption maximum at a wavelength of 650-500 nm.

In the azo metal chelate dye of the invention, the metal ion which forms the chelate with the azo dye compound represented by general formula (1) is Zn²⁺.
Hitherto, azo metal chelate dyes for use in the recording layers of optical recording media mainly include nickel as the metal. Nickel constitutes a hexacoordinate octahedral complex structure and, hence, forms a stable compound with two tridentate azo ligands. On the other hand, the dye of the invention is characterized by employing zinc. Zinc is known to constitute a complex of a tetracoordinate planar structure. When used in combination with azo ligands according to the invention, zinc forms a complex in which two azo coordination sites remain vacant. Because of this, the zinc complex has a less stable structure than conventional azo/nickel complexes. As a result, this zinc complex is a material for high-sensitivity recording layers.
Examples of methods for forming the azo metal chelate dye of the invention include a method in which ligands are mixed with a zinc salt in a solvent. During this chelate formation, the azo dye compound represented by general formula (1) or general formula (2) undergoes proton elimination therefrom for chelate formation with Zn²⁺. Although the protons to be eliminated may be any protons in the structure of the azo dye compound, they preferably include one in the amide part. According to need, a base such as, e.g., an amine or an alkoxide may be used in order to accelerate the proton elimination.

The optical recording medium is explained below.
The optical recording medium to which this embodiment is applied has a recording layer including an azo metal chelate dye constituted of an azo dye compound represented by general formula (1) and of Zn²⁺. This optical recording medium is not limited in constitution. However, it generally has a substrate and may have a layer constitution optionally including an undercoat layer, metallic reflective layer, protective layer, etc. Examples of optical recording media having a preferred layer constitution include one which has a recording layer, metallic reflective layer, and protective layer formed over a substrate.

The optical recording medium to which this embodiment is applied is explained below with respect to an optical recording medium of a structure having such layer constitution as an example.
The material of the substrate in the optical recording medium to which this embodiment is applied may basically be any material which is transparent at the wavelengths of a recording light and reproducing light. For example, a polymeric material such as a polycarbonate resin, vinyl chloride resin, acrylic resin, e.g., poly(methyl methacrylate), polystyrene resin, epoxy resin, vinyl acetate resin, polyester resin, polyethylene resin, polypropylene resin, polyimide resin, or amorphous polyolefin or an inorganic material such as glass is used. It is preferred to use a polycarbonate resin from the standpoints of high productivity, cost, low moisture absorption, etc.

These substrate materials are molded into a disk-form substrate by, e.g., injection molding. There are cases where a guide groove or pits are formed in a surface of the substrate according to need. Although it is preferred that such guide groove or pits should be imparted in substrate molding, a guide groove or pits may be imparted by means of an ultraviolet-cured resin layer formed on the substrate. In the case where the guide groove is spiral, the pitch of this groove is preferably about from 0.4 µm to 1.2 µm, especially preferably about from 0.6 µm to 0.9 µm.

The depth of the groove is generally from 100 nm to 200 nm in terms of value measured with an AFM (atomic force microscope). For enabling the recording medium to be capable of recording at rates ranging from a low rate of 1X to a high rate of 8X or even to 12X or 16X, it is preferred to regulate the groove depth to about from 150 nm to 180 nm. When the groove depth is larger than the lower limit, a high degree of modulation is apt to be obtained at low rates. When the groove depth is smaller than the upper limit, a sufficient reflectance is apt to be secured.

The width of the groove is generally from 0.20 µm to 0.40 µm in terms of value measured with an AFM (atomic force microscope). For high-speed recording, it is more preferred to regulate the groove width to about from 0.28 µm to 0.35 µm. When the groove width is larger than the lower limit, a sufficient amplitude of push-pull signals is apt to be obtained. On the other hand, deformation of the substrate considerably influences the amplitude of recorded signals. Because of this, when the groove width is regulated so as to be larger than the lower limit, it is easy to diminish the influence of thermal interference in recording at a high rate of 8X or above, or an even higher rate of 12X or 16X, and thereby obtain satisfactory jitter. Furthermore, satisfactory recording characteristics and recording conditions are obtained, such as a widened recording power margin and an increased allowance of laser power fluctuations. When the groove width is smaller than the upper limit, thermal interference within recording marks in recording at a low rate of, e.g., 1X can be diminished and a satisfactory jitter value is apt to be obtained.

In the optical recording medium to which this embodiment is applied, information such as address information, information on the kind of the medium, recording pulse conditions, optimal recording power, etc. can be recorded. As a mode for recording such information, for example, an LPP or ADIP format described in, e.g., a DVD-R or DVD+R standard is used.

In producing the optical recording medium to which this embodiment is applied, a recording layer containing the azo metal chelate dye described above is formed on the substrate or on an undercoat layer or another layer formed according to need. Such a recording layer containing an azo metal chelate dye is required to have high sensitivity and a high reflectance.
The recording layer containing the azo metal chelate dye of the invention can satisfy these requirements. In particular, not only an optical recording medium capable of recording at a rate as high as 12X or 16X but also the multilayered medium having two or more recording layers which will be described later can be realized.

Hitherto, a technique which has been used for forming a recording layer capable of high-rate recording (or for obtaining a dye having higher sensitivity) is to shift absorption wavelengths to the longer-wavelength side and thereby increase the amount of light absorbed at a recording wavelength. However, this technique has had a problem that the recording layer has a reduced reflectance although increased in absorption amount. The formation of the target recording layer especially in a multilayered medium has been more difficult because a higher reflectance is required in this medium than in single-layer media.

In contrast, use of a recording layer containing the azo metal chelate dye of the invention can reconcile higher sensitivity with a higher reflectance. Compared to conventional azo metal chelate dyes, the azo metal chelate dye of the invention can impart higher sensitivity because it does not have a stable conformation.
Furthermore, since the introduction of the ester group, which is an electron-attracting group, causes the dye to have a longer absorption wavelength, it contributes to even higher sensitivity. It is thought that since the introduction of the ester group, which has a high electron density, attains an improvement in refractive index, the recording layer can be inhibited from decreasing in reflectance with increasing absorption wavelength.

Examples of techniques usable for forming the recording layer in the optical recording medium to which this embodiment is applied include thin-film formation techniques in general use, such as vacuum deposition, sputtering, doctor blade method, casting, spin coating, and dipping. From the standpoints of suitability for mass-production and cost, spin coating is especially preferred.

In the case of film formation by spin coating, the rotation speed is preferably from 500 rpm to 10,000 rpm. After spin coating, a treatment such as, e.g., heating or exposure to a solvent vapor may be conducted according to need. In the case where the recording layer is formed by coating fluid application by the doctor blade method, casting, spin coating, dipping, or the like, any coating solvent which does not attack the substrate may be used without particular limitations. Examples of the coating solvent include ketone alcohol solvents such as diacetone alcohol and 3-hydroxy-3-methyl-2-butanone; Cellosolve solvents such as methyl Cellosolve and ethyl Cellosolve; linear hydrocarbon solvents such as n-hexane and n-octane; cyclic hydrocarbon solvents such as cyclohexane, methylcyclohexane, ethylcyclohexane, dimethylcyclohexane, n-butylcyclohexane, t-butylcyclohexane, and cyclooctane; perfluoroalkyl alcohol solvents such as tetrafluoropropanol, octafluoropentanol, and hexafluorobutanol; and hydroxycarboxylic acid ester solvents such as methyl lactate, ethyl lactate, and methyl isobutyrate.
In the invention, the content of the azo metal chelate dye of the invention in the recording layer is not particularly limited so long as the effects of the invention are obtained. However, the content thereof is generally 0.1-100% by weight, preferably 10-100% by weight, more preferably 40-100% by weight.

In forming the recording layer, additives such as, e.g., a quencher, ultraviolet absorber, and adhesive may be mixed with the dye according to need. Alternatively, it is possible to introduce a substituent having any of various effects, such as a quenching effect and an ultraviolet-absorbing effect, into the dye. Preferred examples of singlet oxygen quenchers which may be added for improving the light resistance and durability of the recording layer include metal complexes such as acetylacetonato complexes, bisdithiol complexes, e.g., bisdithio-α-diketone and bisphenyldithiol complexes, thiocatechol complexes, salicylaldehyde oxime complexes, and thiobisphenolate complexes. Amine compounds are also preferred.

The dye may be used in combination with one or more other dyes in order to improve recording characteristics, etc.
Furthermore, the azo metal chelate dye to which this embodiment is applied may be used in combination with a dye for low-speed recording in order to reconcile high-speed recording with low-speed recording. In this case, the proportion of the dye for low-speed recording may be lower than 60% and is preferably 50% or lower, more preferably 40% or lower, based on the weight of the azo metal chelate dye.
On the other hand, when the dye for low-speed recording is also used, the proportion thereof is generally 0.01% or higher. In case where the proportion of the dye for low-speed recording is excessively high, there is a possibility that recording sensitivity necessary for high-speed recording at 8X or above might not be sufficiently obtained.

Examples of the dyes usable with the dye of the invention include azo dye compounds of the same family as the azo dye compound represented by general formula (1).
Other examples of the dyes usable with the dye of the invention include azo dyes or azo metal chelate dyes of the same family as the azo metal chelate dye having the specific properties or structure, cyanine dyes, squarylium dyes, naphthoquinone dyes, anthraquinone dyes, porphyrin dyes, tetrapyraporphyrazine dyes, indophenol dyes, pyrylium dyes, thiopyrylium dyes, azulenium dyes, triphenylmethane dyes, xanthene dyes, indanthrene dyes, indigo dyes, thioindigo dyes, merocyanine dyes, bispyrromethene dyes, thiazine dyes, acridine dyes, oxazine dyes, and indoaniline dyes. Namely, dyes of other families may be used. Examples of dye pyrolysis accelerators include metal compounds such as metallic antiknock agents, metallocene compounds, and acetylacetonatometal complexes.

A binder, leveling agent, antifoaming agent, and the like may also be used according to need. Preferred binders include poly(vinyl alcohol), polyvinylpyrrolidone, nitrocellulose, cellulose acetate, ketone resins, acrylic resins, polystyrene resins, urethane resins, poly(vinyl butyral), polycarbonates, and polyolefins.

The thickness of the recording layer (dye layer) is not particularly limited. However, the thickness thereof is preferably from 50 nm to 300 nm. When the thickness of the dye layer is larger than the lower limit, the influence of thermal diffusion can be diminished to facilitate satisfactory recording. Furthermore, recorded signals are less apt to deform and, hence, an increased signal amplitude is apt to be obtained. When the thickness of the dye layer is smaller than the upper limit, a higher reflectance is apt to be obtained and satisfactory reproduced-signal characteristics are apt to be attained.

The groove-part thickness of the recording layer is generally from 90 nm to 180 nm, preferably from 50 nm to 90 nm. The land-part thickness thereof is generally from 50 nm to 100 nm, preferably from 30 nm to 70 nm. When the groove-part thickness or land-part thickness is larger than the lower limit, the amplitude of address information (LPP or ADIP) can be increased and error occurrence is apt to be inhibited. When the groove-part thickness or land-part thickness is smaller than the upper limit, the influence of heat buildup within recording marks and crosstalk can be inhibited from increasing and satisfactory jitter is apt to be obtained.

In the optical recording medium to which this embodiment is applied, a reflectance of 40% or higher can be attained by employing a recording layer containing the azo metal chelate dye having the specific properties or structure described above in combination with the shape of a groove formed in the substrate. Because of this, a DVD-R (although there are two kinds, i.e., DVD-R and DVD+R, according to standards, these two are inclusively referred to as DVD-R) which has reproducing interchangeability with, e.g., DVD-ROMs can be realized. The term reflectance means the reflectance measured with a disk reproducer having a pickup including a laser with a wavelength in the range of from 650 nm + 10 nm to 650 nm - 5 nm (e.g., a DVD player, DVD-ROM inspector, or DVD drive) when the groove of the optical disk is tracked.

A reflective layer preferably having a thickness of from 50 nm to 300 nm is then formed on the recording layer. As a material for forming the reflective layer, one having a sufficiently high reflectance at the wavelength of a reproducing light can be used. For example, metals such as Au, Al, Ag, Cu, Ti, Cr, Ni, Pt, Ta, and Pd can be used alone or as an alloy thereof.
Of these, Au, Al, and Ag have a high reflectance and are suitable as a material for the reflective layer. In particular, silver and silver alloys are preferred because they are superior in reflectance and thermal conductivity.

Besides those metals, the following may be contained. Examples of elements which may be contained include metals and semimetals such as Mg, Se, Hf, V, Nb, Ru, W, Mn, Re, Fe, Co, Rh, Ir, Cu, Zn, Cd, Ga, In, Si, Ge, Te, Pb, Po, Sn, and Bi.
Of these, a material including silver as a main component is especially preferred from the standpoints, for example, that it has a low cost, that it tends to improve reflectance when used in combination with the azo metal chelate dye, and that when the print-receiving layer which will be described later is to be formed, a white beautiful ground color can be imparted thereto. The term main component herein means a component whose content is 50% or higher. A multilayered film formed by alternately superposing a low-refractive-index thin film and a high-refractive-index thin film using nonmetallic materials can also be used as a reflective layer.

Examples of techniques for forming the reflective layer include sputtering, ion plating, chemical vapor deposition, and vacuum deposition. A known, inorganic or organic interlayer or adhesive layer may be formed on the substrate or beneath the reflective layer for the purposes of improving reflectance, improving recording characteristics, improving adhesion, etc.

The material to be used for forming a protective layer on the reflective layer is not particularly limited so long as it protects the reflective layer from external forces. Examples of organic substances include thermoplastic resins, thermosetting resins, electron-beam-curable resins, and UV-curable resins. Examples of inorganic substances include SiO₂, SiN₄, MgF₂, and SnO₂. In the case of a thermoplastic resin, thermosetting resin, or the like, a protective layer can be formed by dissolving the resin in an appropriate solvent, applying the resultant coating fluid, and drying the coating.
In the case of a UV-curable resin, a protective layer can be formed by applying the resin as it is or applying a coating fluid prepared by dissolving the resin in an appropriate solvent and then irradiating the coating with UV light to cure the resin.
As the UV-curable resin, an acrylate resin such as, e.g., a urethane acrylate, epoxy acrylate, or polyester acrylate can be used. These materials may be used alone or as a mixture thereof. The protective layer to be used may be not only a single-layer film but also a multilayered film.

For forming the protective layer, use may be made of coating fluid application by spin coating, casting, or another method or a technique such as sputtering, chemical vapor deposition, or the like as in the case of the recording layer.
Preferred of these is spin coating. The thickness of the protective layer is generally in the range of from 0.1 µm to 100 µm. In this embodiment, the thickness of the protective layer is preferably 3 µm or larger, more preferably 5 µm or larger, and is preferably 30 µm or smaller, more preferably 20 µm or smaller.

This embodiment should not be construed as being limited to the modes described above and can be variously modified. For example, the optical recording medium may have two or more recording layers. Furthermore, a technique may be used in which a so-called dummy substrate, i.e., a substrate having no groove in the surface on the reflective-layer side, is laminated, or in which two optical recording media are laminated to each other so that the respective reflective-layer sides face inward, i.e., face each other. A film of an ultraviolet-cured resin, a thin inorganic film, or the like may be formed on the substrate mirror surface side for the purpose of surface protection or prevention of the adhesion of dust particles, etc. Moreover, a print-receiving layer may be further formed, for example, on the protective layer overlying the reflective layer or on the substrate laminated to the reflective-layer side.

### (Multilayered Medium)

The optical recording medium to which this embodiment is applied may be a multilayered medium having two or more recording layers. Application to this multilayered medium also is preferred. The multilayered medium may be an optical recording medium in which recording and reproducing are conducted with a light entering the medium from each side, or may be an optical recording medium in which recording and reproducing are conducted with a light entering the medium from one side only. Of these, the medium of the type in which recording and reproducing are conducted with a light entering the medium from one side only can be advantageously used. This is because the recording layer containing the azo metal chelate dye of the invention has high sensitivity and a high reflectance.

The multilayered medium to which this embodiment is applied is not limited in the number of recording layers so long as it has two or more recording layers. However, the medium has generally two to five, preferably two or three recording layers. Although layer constitution is not particularly limited, the recording layers are usually separated by one or more other layers, e. g. , an interlayer. In a preferred layer constitution, each recording layer is disposed in combination with a reflective layer.
Examples of the layer constitution of a multilayered medium of the type which has two recording layers and in which recording and reproducing are conducted with a light irradiating the medium from one side only include a constitution composed of substrate/first recording layer/first reflective layer/interlayer/second recording layer/second reflective layer/protective layer. This constitution may suitably have one or more other layers between those layers.

In the multilayered medium, the interlayer for separating the two or more recording layers may be constituted of a single-layer film or may be a multilayered film. The interlayer is usually made of a resin which is transparent, can have a guide groove therein, and has high adhesion. It is more preferred to use a resin having a low degree of shrinkage in curing/bonding because the medium obtained therewith has high shape stability.

It is desirable that the interlayer should be made of a material which does not damage the adjoining recording layer. Examples of the material for constituting the interlayer include thermoplastic resins and curable resins such as thermosetting resins and radiation-curable resins. One of such materials for the interlayer may be used alone, or a combination of any desired two or more thereof in any desired proportion may be used.

Preferred of those materials for the interlayer are radiation-curable resins. Of these, ultraviolet-curable resins are preferred. Examples of the ultraviolet-curable resins include a radical type (radical polymerization type) ultraviolet-curable resin and a cationic type (cationic polymerization type) ultraviolet-curable resin; either of these can be used.

As the radial type ultraviolet-curable resin, for example, a composition containing one or more ultraviolet-curable compounds (radical type ultraviolet-curable compounds) and a photopolymerization initiator as components is used. As the radical type ultraviolet-curable compounds can, for example, be used polymerizable monomer ingredients such as monofunctional (meth)acrylates and polyfunctional (meth)acrylates. One of these monomer ingredients may be used alone, or a combination of any desired two or more thereof in any desired proportion may be used. Incidentally, acrylates and methacrylates are herein inclusively referred to as (meth)acrylates.

The photopolymerization initiator is not limited. However, one of the molecule cleavage type or hydrogen abstraction type, for example, is preferred. It is preferred in the invention that an uncured precursor for ultraviolet-cured resin which contains a radical polymerization type acrylic ester as a main component should be used and cured to obtain an interlayer.

On the other hand, examples of the cationic type ultraviolet-curable resin include epoxy resins containing a cationic polymerization type photoinitiator. Examples of the epoxy resins include the bisphenol A/epichlorohydrin type, alicyclic epoxies, long-chain aliphatic type, brominated epoxy resins, glycidyl ester type, glycidyl ether type, and heterocyclic type. It is preferred to use an epoxy resin reduced in the content of free chlorine and chlorine ions. The amount of chlorine is preferably 1% by weight or smaller, more preferably 0.5% by weight or smaller.
Examples of the cationic polymerization type photoinitiator include sulfonium salts, iodonium salts, and diazonium salts.

Like the substrate described above, the interlayer usually has a guide groove formed therein. The shape of the guide groove formed in the substrate and the shape of the guide groove formed in the interlayer may be the same or different.
The thickness of the interlayer is not limited. However, it is generally 5 µm or larger, preferably 10 µm or larger, and is generally 100 µm or smaller, preferably 70 µm or smaller.
It is desirable that the interlayer should have an even thickness.

For forming the interlayer, any desired technique may be used without limitations. However, the interlayer is formed usually in the following manners.
In the case where an interlayer is formed from a thermoplastic resin, thermosetting resin, or the like, the thermoplastic resin or the like is dissolved in an appropriate solvent to prepare a coating fluid. This coating fluid is applied and dried (heated), whereby the interlayer can be formed.

On the other hand, in the case where an interlayer is formed from a radiation-curable resin, this resin by itself is used as a coating fluid or is dissolved in an appropriate solvent to prepare a coating fluid. This coating fluid is applied and cured by irradiation with an appropriate radiation, whereby the interlayer can be formed.
Methods for coating fluid application are not limited. For example, use may be made of coating techniques such as spin coating and casting. Preferred of these is spin coating.
In particular, interlayer formation from a resin having a high viscosity is possible also through coating fluid application by screen printing or the like.
In the multilayered medium to which this embodiment is applied, the azo metal chelate dye of the invention may be used in any recording layer.
In the invention, the content of the azo metal chelate dye of the invention in the two or more recording layers is not particularly limited so long as the effects of the invention are obtained. However, the content thereof in one recording layer is generally 0.1-100% by weight, preferably 10-100% by weight, more preferably 40-100% by weight.

Recording in the optical recording medium thus obtained is usually conducted by causing a laser light to irradiate the recording layer disposed on each or one side of the substrate. That part of the recording layer on which the laser light irradiates generally undergoes a thermal deformation due to the decomposition, heat generation, melting, or the like caused by the absorption of laser light energy. The information recorded is reproduced usually by using a laser light to detect a difference in reflectance between the part which has the thermal deformation and the part which does not have the deformation.

The laser to be used for recording/reproducing is not particularly limited. Examples thereof include dye lasers capable of wavelength selection in a wide range within the visible region, helium-neon lasers having a wavelength of 633 nm, high-output semiconductor lasers having wavelengths around 680 nm, 660 nm, and 635 nm which are being developed recently, blue lasers around 400 nm, and harmonic conversion YAG lasers having a wavelength of 532 nm. Of these, semiconductor lasers are preferred from the standpoints of lightweight properties, ease of handling, compactness, cost, etc. In the optical recording medium to which this embodiment is applied, high-density recording and reproducing are possible at one or more wavelengths selected from those.

### EXAMPLES

This embodiment will be explained below in detail by reference to Examples. However, the Examples should not be construed as limiting this embodiment unless they depart from the spirit thereof.

### (EXAMPLE 1)

### (a) Compound Production Example

### (Diazo Coupling)

In 84 g of acetic acid, 72 g of phosphoric acid, and 28 g of sulfuric acid was dissolved 12.2 g of 2-amino-5-ethoxycarbonyl-1,3,4-thiadiazole (structural formula 1a). This solution was cooled to 5°C or lower. Thereto was added dropwise 22 g of 43% nitrosylsulfuric acid. Thus, a solution of a diazo compound of 2-amino-5-ethoxycarbonyl-1,3,4-thiadiazole was prepared.
Subsequently, the diazo compound solution obtained above was added dropwise to a solution composed of 8.6 g of the compound represented by the following structural formula 1b and 172 mL of methanol under the conditions of 5°C or lower, and the resultant mixture was stirred for 2 hours. This mixture was then neutralized with 28% ammonia water. Thereafter, the crystals precipitated were taken out by filtration and purified to obtain 20 g of the azo compound represented by the following structural formula 1c.

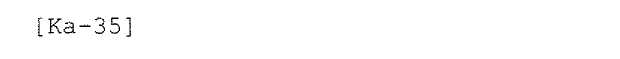

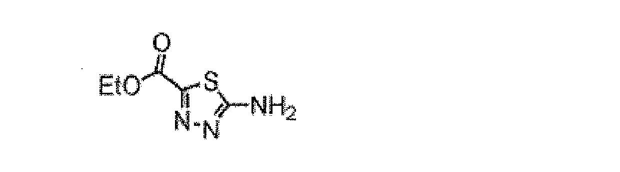

### (Structural Formula 1a)

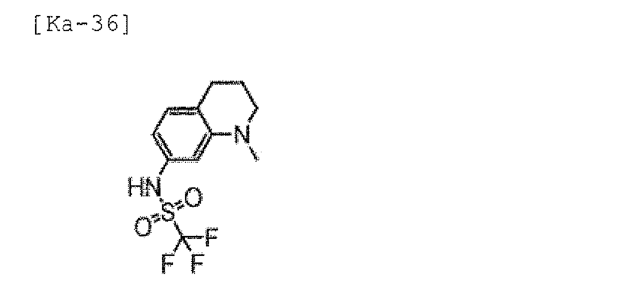

### (Structural Formula 1b)

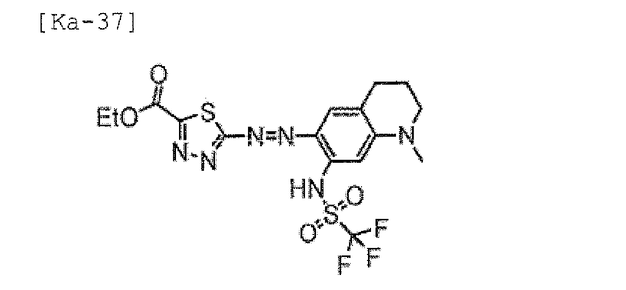

### (Structural Formula 1c)

### (Metal Complexation)

In 69 mL of tetrahydrofuran and 10 mL of dimethylformamide was dissolved 2.3 g of the azo compound represented by structural formula 1c. The insoluble matter was removed by filtration. Subsequently, 0.64 g of zinc acetate dihydrate was dissolved in 9 mL of methanol, and this solution was added dropwise at room temperature to the solution of the azo compound represented by structural formula 1c. Furthermore, 120 mL of methanol was added thereto, and the resultant mixture was stirred and then concentrated under reduced pressure. The solid precipitated was suspended in and washed with methanol, taken out therefrom by filtration, and dried. Thus, an azo zinc chelate dye was obtained in an amount of 1.8 g.
This azo zinc chelate dye had a maximum absorption wavelength of 588 nm and a gram extinction coefficient of 146 L/g·cm in chloroform, and a coating film of the dye had an absorption maximum wavelength of 609 nm.

### (b) Recording Example

A 1.5% by weight TFP (2,2,3,3-tetrafuoro-1-propanol (hereinafter referred to as TFP)) solution of the azo zinc chelate dye prepared above was applied by spin coating on a transparent polycarbonate substrate having a guide groove formed therein which had a track pitch of 0.74 µm, groove depth of 160 nm, and groove width of 0.31 µm. The coating was dried at 80°C for 20 minutes. The resultant recording layer had a land-part thickness of 40 nm and a groove part thickness of 85 nm. Silver was sputtered in a thickness of 120 nm on the recording layer. Thereafter, an ultraviolet-curable resin was applied by spin coating in a thickness of 3 µm. Furthermore, a transparent polycarbonate substrate having no groove was laminated thereto after adhesive application by spin coating. Thus, an optical recording medium was produced.

This optical recording medium was subjected to random signal recording with EFM plus modulation using a recording/reproducing apparatus having a wavelength of 650 nm and a numerical aperture of 0.65. For this recording, recording pulse strategy conditions in accordance with DVD-R Specification for General Ver. 2.1 was used. The recording was conducted at a rate of 56.0 m/s (corresponding to 16-fold speed, i.e., 16X, for DVD-Rs) and a minimum mark length of 0.4 µm. Thereafter, the same evaluation apparatus was used to reproduce the signals in the recording part at 3.5 m/s (corresponding to 1-fold speed for DVD-Rs) to determine bottom jitter (data-to-clock jitter). Furthermore, the optical recording medium was examined for reflectance in terms of the value obtained by converting a voltage value outputted from the evaluation apparatus (reflectance is proportional to voltage). Incidentally, the value of bottom jitter is preferably lower than 9.5%, more preferably lower than 9.0%. With respect to reflectance, higher values are preferred.
As a result of the examination, the 16X recording sensitivity and the bottom jitter were found to be 45.5 mW and 8.8%, respectively, which were satisfactory. The reflectance was found to be as high as 58%, which also was satisfactory.

### (EXAMPLE 2)

### (a) Compound Production Example

The compound represented by structural formula 1b in Example 1 was replaced by that represented by the following structural formula 2b, and this compound was reacted in the same manner as in Example 1. Thus, an azo zinc chelate dye constituted of the azo compound represented by the following structural formula 2c and zinc was obtained.
This azo zinc chelate dye had a maximum absorption wavelength of 591 nm and a gram extinction coefficient of 141 L/g·cm in chloroform, and a coating film of the dye had an absorption maximum wavelength of 611 nm.

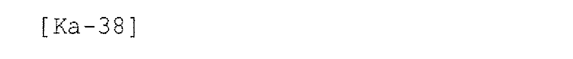

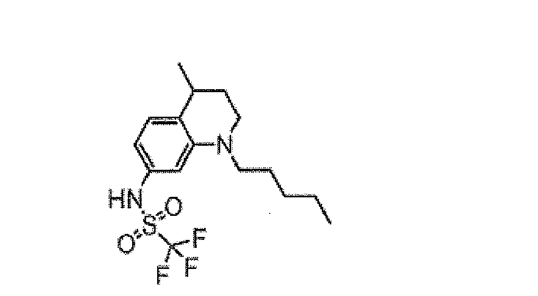

### (Structural Formula 2b)

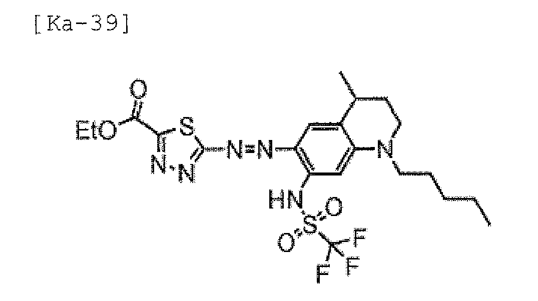

### (Structural Formula 2c)

### (b) Recording Example

An optical recording medium was produced under completely the same conditions as in Example 1, except that the dye obtained above was used. The recording layer in this medium had a land-part thickness of 40 nm and a groove-part thickness of 85 nm, which were almost the same as for the dye of Example 1.
Subsequently, this disk was subjected to recording/reproducing under the same conditions as in Example 1. In this examination, the disk gave satisfactory results including a 16X recording sensitivity of 45.0 mW, a bottom jitter in 1X reproducing of 8.9%, and a reflectance of 57%.

### (EXAMPLE 3)

### (a) Compound Production Example

The compound represented by structural formula 1b in Example 1 was replaced by that represented by the following structural formula 3b, and this compound was reacted in the same manner as in Example 1. Thus, an azo zinc chelate dye constituted of the azo compound represented by the following structural formula 3c and zinc was obtained.
This azo zinc chelate dye had a maximum absorption wavelength of 592 nm and a gram extinction coefficient of 142 L/g·cm in chloroform, and a coating film of the dye had an absorption maximum wavelength of 610 nm.

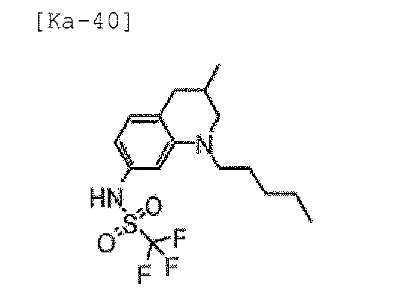

### (Structural Formula 3b)

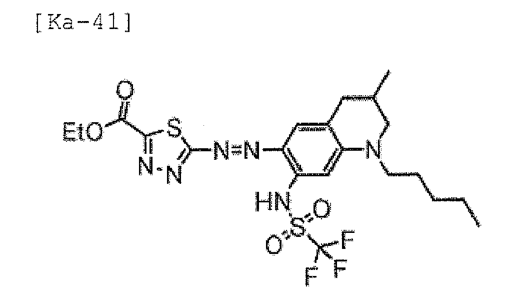

### (Structural Formula 3c)

### (b) Recording Example

An optical recording medium was produced under completely the same conditions as in Example 1, except that the dye obtained above was used. The recording layer in this medium had a land-part thickness of 40 nm and a groove-part thickness of 85 nm, which were almost the same as for the dye of Example 1.
Subsequently, this disk was subjected to recording/reproducing under the same conditions as in Example 1. As a result, the disk gave satisfactory results including a 16X recording sensitivity of 43.0 mW, a bottom jitter in 1X reproducing of 8.8%, and a reflectance of 57%.

### (EXAMPLE 4)

### (a) Compound Production Example

The compound represented by structural formula 1b in Example 1 was replaced by that represented by the following structural formula 4b, and this compound was reacted in the same manner as in Example 1. Thus, an azo zinc chelate dye constituted of the azo compound represented by the following structural formula 4c and zinc was obtained.
This azo zinc chelate dye had a maximum absorption wavelength of 586 nm and a gram extinction coefficient of 142 L/g·cm in chloroform, and a coating film of the dye had an absorption maximum wavelength of 605 nm.

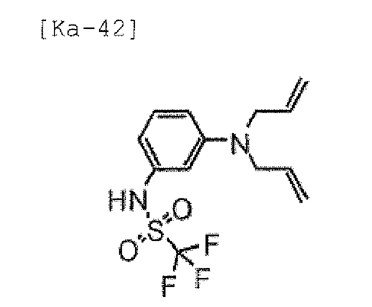

### (Structural Formula 4b)

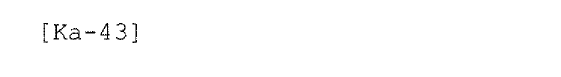

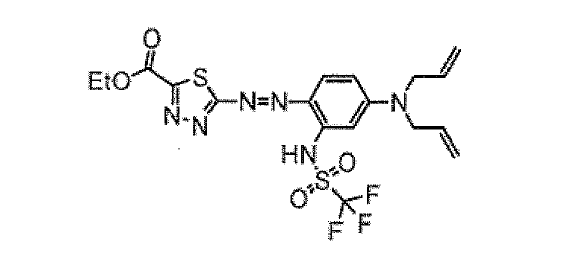

### (Structural Formula 4c)

### (b) Recording Example

An optical recording medium was produced under completely the same conditions as in Example 1, except that the dye obtained above was used. The recording layer in this medium had a land-part thickness of 40 nm and a groove-part thickness of 85 nm, which were almost the same as for the dye of Example 1.
Subsequently, this disk was subjected to recording/reproducing under the same conditions as in Example 1. As a result, the disk gave satisfactory results including a 16X recording sensitivity of 52.5 mW, a bottom jitter in 1X reproducing of 8.6%, and a reflectance of 56%.

### (EXAMPLE 5)

### (a) Compound Production Example

The compound represented by structural formula 1a in Example 1 was replaced by that represented by the following structural formula 5a and the compound represented by structural formula 1b in Example 1 was replaced by that represented by structural formula 4b. These compounds were reacted in the same manner as in Example 1. Thus, an azo zinc chelate dye constituted of the azo compound represented by the following structural formula 5c and zinc was obtained.
This azo zinc chelate dye had a maximum absorption wavelength of 586 nm and a gram extinction coefficient of 138 L/g·cm in chloroform, and a coating film of the dye had an absorption maximum wavelength of 604 nm.

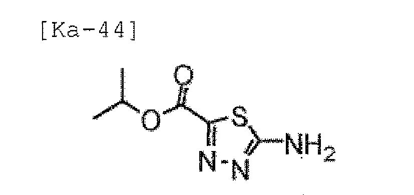

### (Structural Formula 5a)

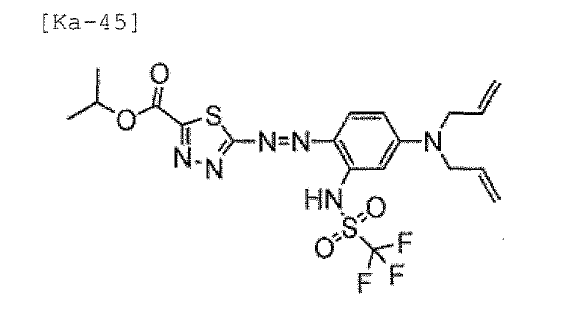

### (Structural Formula 5c)

### (b) Recording Example

An optical recording medium was produced under completely the same conditions as in Example 1, except that the dye obtained above was used. The recording layer in this medium had a land-part thickness of 40 nm and a groove-part thickness of 85 nm, which were almost the same as for the dye of Example 1.
Subsequently, this disk was subjected to recording/reproducing under the same conditions as in Example 1. As a result, the disk gave satisfactory results including a 16X recording sensitivity of 52.0 mW, a bottom jitter in 1X reproducing of 9.0%, and a reflectance of 54%.

### (EXAMPLE 6)

### (a) Compound Production Example

The compound represented by structural formula 1a in Example 1 was replaced by that represented by the following structural formula 6a and the compound represented by structural formula 1b in Example 1 was replaced by that represented by structural formula 4b. These compounds were reacted in the same manner as in Example 1. Thus, an azo zinc chelate dye constituted of the azo compound represented by the following structural formula 6c and zinc was obtained.
This azo zinc chelate dye had a maximum absorption wavelength of 586 nm and a gram extinction coefficient of 129 L/g·cm in chloroform, and a coating film of the dye had an absorption maximum wavelength of 602 nm.

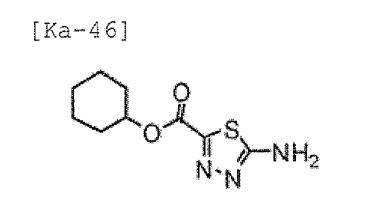

### (Structural Formula 6a)

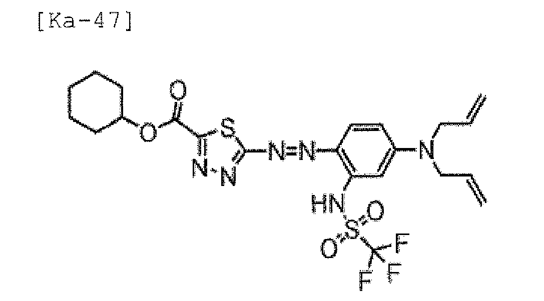

### (Structural Formula 6c)

### (b) Recording Example

An optical recording medium was produced under completely the same conditions as in Example 1, except that the dye obtained above was used. The recording layer in this medium had a land-part thickness of 40 nm and a groove-part thickness of 85 nm, which were almost the same as for the dye of Example 1.
Subsequently, this disk was subjected to recording/reproducing under the same conditions as in Example 1. As a result, the disk gave satisfactory results including a 16X recording sensitivity of 50.0 mW, a bottom jitter in 1X reproducing of 8.8%, and a reflectance of 50%.

### (COMPARATIVE EXAMPLE 1)

### (a) Compound Production Example

The compound represented by structural formula 1a in Example 1 was replaced by that represented by the following structural formula 7a and the compound represented by structural formula 1b in Example 1 was replaced by that represented by the following structural formula 7b. These compounds were reacted in the same manner as in Example 1. Thus, an azo zinc chelate dye constituted of the azo compound represented by the following structural formula 7c and zinc was obtained.
This azo zinc chelate dye had a maximum absorption wavelength of 580 nm and a gram extinction coefficient of 145 L/g·cm in chloroform, and a coating film of the dye had an absorption maximum wavelength of 603 nm.

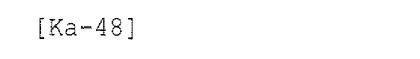

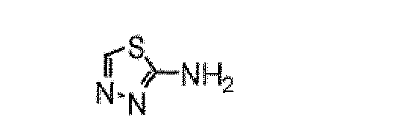

### (Structural Formula 7a)

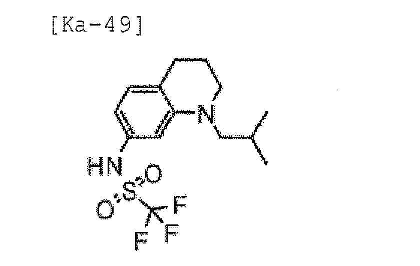

### (Structural Formula 7b)

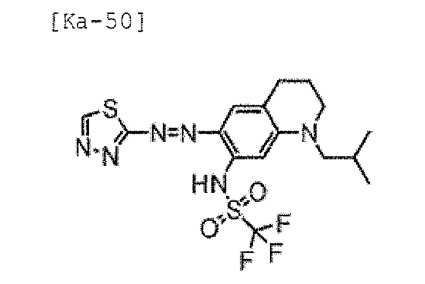

### (Structural Formula 7c)

### (b) Recording Example

An optical recording medium was produced under completely the same conditions as in Example 1, except that the dye obtained above was used. The recording layer in this medium had a land-part thickness of 40 nm and a groove-part thickness of 85 nm, which were almost the same as for the dye of Example 1.
Subsequently, this disk was subjected to recording/reproducing under the same conditions as in Example 1. As a result, the disk had a 16X recording sensitivity of 54.0 mW, a bottom jitter in 1X reproducing of 8.9%, and a reflectance of 47%. This disk had a satisfactory value of bottom jitter, which was almost the same as in Example 1. However, the reflectance thereof was lower than that in Example 1 by as large as 11%, and the disk necessitated a power for recording (16X recording sensitivity) as large as 1.19 times the power for recording in Example 1.

### (COMPARATIVE EXAMPLE 2)

### (a) Compound Production Example

The zinc acetate dihydrate in Example 1 was replaced by nickel acetate tetrahydrate. This compound was reacted in the same manner as in Example 1. Thus, an azo nickel chelate dye constituted of the azo compound represented by structural formula 1c and nickel was obtained.
This azo nickel chelate dye had a maximum absorption wavelength of 595 nm and a gram extinction coefficient of 137 L/g·cm in chloroform, and a coating film of the dye had an absorption maximum wavelength of 613 nm.

### (b) Recording Example

An optical recording medium was produced under completely the same conditions as in Example 1, except that the dye obtained above was used. The recording layer in this medium had a land-part thickness of 40 nm and a groove-part thickness of 85 nm, which were almost the same as for the dye of Example 1.

Subsequently, this disk was subjected to recording/reproducing under the same conditions as in Example 1. As a result, the disk had a 16X recording sensitivity of 31.0 mW, a bottom jitter in 1X reproducing of 9.8%, and a reflectance of 42%. A comparison with Example 1 shows that the reflectance of this disk was lower by as large as 16% than that in Example 1 and the bottom jitter thereof also was poor, although the recording sensitivity thereof was satisfactory.
The results obtained in Example 1 to Example 6, Comparative Example 1, and Comparative Example 2 are shown in Table 1.

**[Table 1]**

| | Dye | | Maximum absorption wavelength (nm) | Gram extinction coefficient (L/g·cm) | Absorption maximum wavelength of coating film (nm) | 16X recording sensitivity (mW) | Bottom jitter (%) | Reflectance (%) |
|---|---|---|---|---|---|---|---|---|
| | Azo compound | Metal | | | | | | |
| Ex. 1 | structural formula 1c | Zn | 588 | 146 | 609 | 45.5 | 8.8 | 58 |
| Ex. 2 | structural formula 2c | Zn | 591 | 141 | 611 | 45.0 | 8.9 | 57 |
| Ex. 3 | structural formula 3c | Zn | 592 | 142 | 610 | 43.0 | 8.8 | 57 |
| Ex. 4 | structural formula 4c | Zn | 586 | 142 | 605 | 52.5 | 8.6 | 56 |
| Ex. 5 | structural formula 5c | Zn | 586 | 138 | 604 | 52.0 | 9.0 | 54 |
| Ex. 6 | structural formula 6c | Zn | 586 | 129 | 602 | 50.0 | 8.8 | 50 |
| Comp. Ex. 1 | structural formula 7c | Zn | 580 | 145 | 603 | 54.0 | 8.9 | 47 |
| Comp. Ex. 2 | structural formula 1c | Ni | 595 | 137 | 613 | 31.0 | 9.8 | 42 |

It can be seen from the results given in Table 1 that Example 1 to Example 6 each give excellent results concerning recording characteristics and reflectance as compared with Comparative Example 1 and Comparative Example 2. Of the dyes used in these Examples, the dyes used especially in Example 1 to Example 3 are satisfactory in all of 16X recording sensitivity, bottom jitter, and reflectance and are especially preferred.

### (EXAMPLE 7)

The same dye as that used in Example 1 was used to produce a two-layer medium, and the recording layers, i.e., Layer 0 and Layer 1, each were evaluated for recording characteristics. For each of the two recording layers, the same dye as in Example 1 was used. The term Layer 0 means the recording layer (first recording layer) located on the side near to the substrate. The term Layer 1 means the recording layer (second recording layer) located far from the laser light entrance side. As a first reflective layer was deposited an AgBi_{1.0} alloy film in a thickness of 20 nm. As a second reflective layer was deposited a silver film having a thickness of 120 nm. As an interlayer was formed a film of an ultraviolet-cured resin in a thickness of 50 µm. The track pitch for each recording layer was regulated to 0.74 µm. The groove depths were regulated to 170 nm for the Layer 0 and 180 nm for the Layer 1. The groove width for each recording layer was regulated to 0.31 µm. The Layer 0 had a land-part thickness of 30 nm and a groove-part thickness of 65 nm. The Layer 1 had a land-part thickness of 40 nm and a groove-part thickness of 75 nm.

This optical recording medium was subjected to random signal recording with EFM plus modulation using a recording/reproducing apparatus having a wavelength of 650 nm and a numerical aperture of 0.65. For this recording, recording pulse strategy conditions in accordance with DVD+R 8.5-Gigabytes Basic Format Specifications version 1.1 was used. The recording was conducted at a rate of 61.4 m/s (corresponding to 16-fold speed, i.e., 16X, for DVD+Rs) and a minimum mark length of 0.44 µm. Thereafter, the same evaluation apparatus was used to reproduce the signals in the recording part at 3.84 m/s to determine bottom jitter (data-to-clock jitter).
As a result of the evaluation, the Layer 0 was found to have a 16X recording sensitivity of 50.0 mW, a bottom jitter in 1X reproducing of 6.5%, and a reflectance of 20%. The Layer 1 was found to have a 16X recording sensitivity of 80.0 mW, a bottom jitter in 1X reproducing of 8.0%, and a reflectance of 19%. These were satisfactory results.

### (COMPARATIVE EXAMPLE 3)

A two-layer medium was produced in the same manner as in Example 7, except that use was made of the same dye as that used in Comparative Example 1. For each of the two recording layers, the same dye as in Comparative Example 1 was used. This optical recording medium was examined for recording characteristics and reflectance by the same methods as in Example 7. The results obtained are shown in Table 2 together with the results obtained in Example 7.

**[Table 2]**

| | Layer | Dye | | 16X recording sensitivity (mW) | Bottom jitter (%) | Reflectance (%) |
|---|---|---|---|---|---|---|
| | | Azo compound | Metal | | | |
| Ex. 7 | 0 | structural formula 1c | Zn | 50.0 | 6.5 | 20 |
| | 1 | structural formula 1c | Zn | 80.0 | 8.0 | 19 |
| Comp. Ex. 3 | 0 | structural formula 7c | Zn | 66.0 | 6.5 | 13 |
| | 1 | structural formula 7c | Zn | recording was impossible | | 12 |

The results given in Table 2 show the following. The Layer 0 has a 16X recording sensitivity of 66.0 mW and a bottom jitter in 1X reproducing of 6.5%. Namely, this recording layer has satisfactory recording characteristics. However, it has a reflectance of 13%. It can be seen that the Layer 0 has a considerably reduced reflectance. With respect to 16X recording in the Layer 1, the tester was insufficient in laser power and recording at 80 mW was impossible. The Layer 1 had a reflectance of 12%. The Layer 1 had considerably reduced recording characteristics as compared with that in Example 7.
While the invention has been described in detail and with reference to specific embodiments thereof, it will be apparent to one skilled in the art that various changes and modifications can be made therein without departing from the spirit and scope thereof.
This application is based on a Japanese patent application filed on September 25, 2006 (Application No. 2006-259597), the entire contents thereof being herein incorporated by reference.

### INDUSTRIAL APPLICABILITY

According to the invention, an azo metal chelate dye is provided which is suitable for the recording layer of an optical recording medium capable of high-speed recording or for at least one recording layer of an optical recording medium having two or more recording layers. Also provided is an optical recording medium

## Claims

1. An azo metal chelate dye comprising an azo dye compound represented by the following general formula (1) and Zn²⁺: 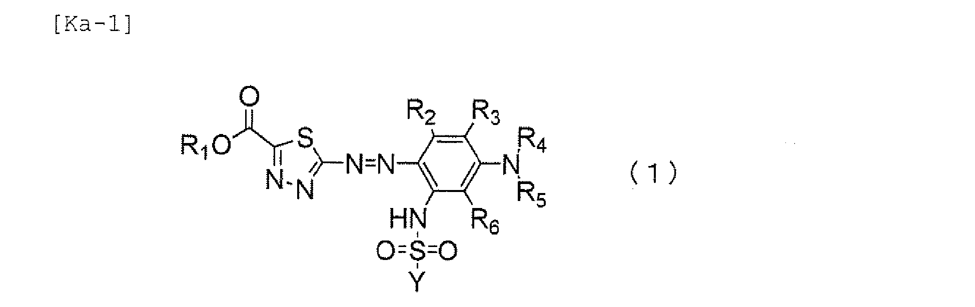 (wherein R₁ represents a linear or branched alkyl group that may be substituted or a cycloalkyl group that may be substituted; Y represents a linear or branched alkyl group substituted with at least two fluorine atoms; and R₂, R₃, R₄, R₅, and R₆ each independently represents a hydrogen atom or a linear or branched alkyl group that may be substituted, and R₃ and R₄, R₄ and R₅, or R₅ and R₆ may be bonded to each other to form a ring; and a proton is released from the compound represented by formula (1) so as to form the chelate dye with Zn²⁺).

2. An azo metal chelate dye comprising an azo dye compound represented by the following general formula (2) and Zn²⁺: 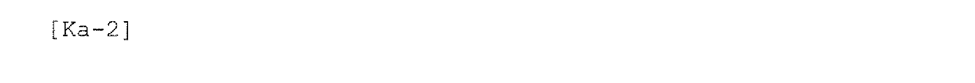 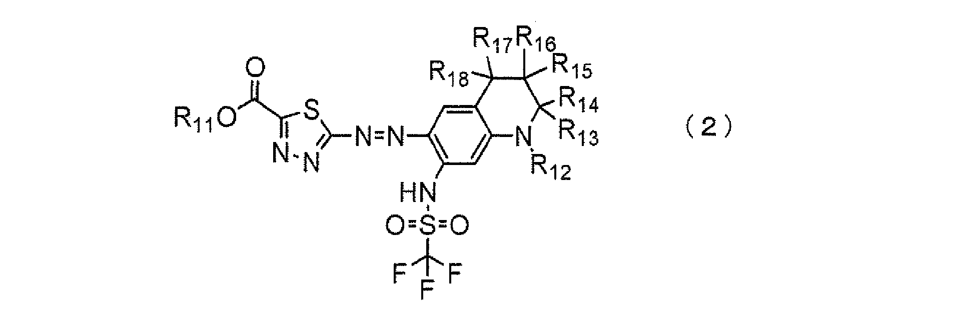 (wherein R₁₁ represents a linear or branched alkyl group that may be substituted or a cycloalkyl group that may be substituted; R₁₂ represents a linear or branched alkyl group that may be substituted; and R₁₃ to R₁₈ each independently represent a hydrogen atom or a linear or branched alkyl group that may be substituted; and a proton is released from the compound represented by formula (2) so as to form the chelate dye with Zn²⁺).

3. The azo metal chelate dye according to claim 2, wherein in general formula (2), R₁₂ is a linear or branched alkyl group and R₁₃ to R₁₈ each independently are a hydrogen atom or methyl.

4. An optical recording medium comprising a recording layer comprising the azo metal chelate dye according to any one of claims 1 to 3.

5. The optical recording medium according to claim 4, which comprises two or more recording layers, in which at least one of the recording layers comprises the azo metal chelate dye.

6. The optical recording medium according to claim 4 or 5, which is capable of recording at a 12-fold speed or higher.
